(19) Europäisches Patentamt

European Patent Office

Office européen des brevets

(11) **EP 4 618 387 A1**

(12) **EUROPEAN PATENT APPLICATION**

(43) Date of publication:
**17.09.2025 Bulletin 2025/38**

(21) Application number: **25163956.3**

(22) Date of filing: **14.03.2025**

(51) International Patent Classification (IPC):
**H02M 1/00** (2006.01)    **H02M 1/42** (2007.01)
**H02M 7/487** (2007.01)

(52) Cooperative Patent Classification (CPC):
**H02M 1/4216; H02M 1/0085; H02M 1/4233;**
H02M 1/0095; H02M 1/10; H02M 7/23; H02M 7/487

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.03.2024  US 202463565193 P**

(71) Applicant: **Delta Electronics, Inc.
Neihu, Taipei 11491 (TW)**

(72) Inventors:
• **Haryani, Nidhi
  Morrisville, NC 27560 (US)**

• **Wang, Dakai
  Morrisville, NC 27560 (US)**
• **Hagemeyer, Marc
  D-59495 Soest (DE)**
• **Figge, Heiko
  D-59495 Soest (DE)**
• **Barbosa, Peter Mantovanelli
  Morrisville, NC 27560 (US)**
• **Sadilek, Tomas
  Morrisville, NC 27560 (US)**

(74) Representative: **Uexküll & Stolberg
Partnerschaft von
Patent- und Rechtsanwälten mbB
Beselerstraße 4
22607 Hamburg (DE)**

(54) **THREE-PHASE/SINGLE-PHASE COMPATIBLE AC/DC CONVERTER AND CONTROL METHOD THEREOF**

(57)    The present disclosure provides a three-phase/-single-phase compatible AC/DC converter (52, 118) and a control method. The three-phase/single-phase compatible AC/DC converter (52) includes plural relays ($RL_1$, $RL_2$, and $RL_3$) that, when selectively activated or deactivated, enables operation as a three-phase converter or a totem-pole power factor correction (PFC) converter (56) with a single-phase input, the totem-pole PFC converter having a parallel arrangement of a diode leg (68) and slow leg (66) connected at their respective midpoints to neutral so as to operate in unity power factor or non-unity power factor. The method includes: operating plural fast legs (60, 62) at a first duty cycle for a period defined by a predefined range of an input voltage, and at least a second duty cycle outside of the period different than the first duty cycle for non-unity power factor cases; and increasing a switching frequency of the slow leg (66) during the period while in non-unity power factor operation.

FIG. 11

EP 4 618 387 A1

**Description**

**FIELD OF THE INVENTION**

The present disclosure relates to an electric vehicle on-board charger, and more particularly to a three-phase/single-phase compatible AC/DC converter and control method thereof.

**BACKGROUND OF THE INVENTION**

Electric vehicles (EVs) are driven by electric motors, instead of internal combustion engines. Electric motors do not emit greenhouse gasses, whereas internal combustion engines do. In an era where environmental protection has become a global concern, the demand for electric vehicles has increased.

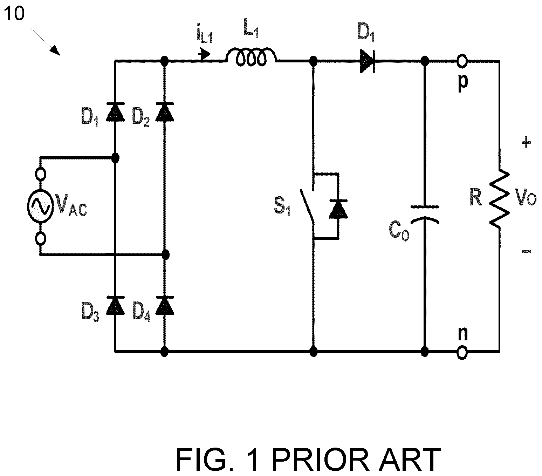

State-of-the-art power electronics rectifiers should comply with input current, harmonic standards when interfacing with an AC utility system. The limits for low-frequency harmonic distortion are stringent, and generally are met by imposing a sinusoidal input current to a power converter that interfaces with the AC utility system. A power converter that interfaces with the AC utility system and achieves low harmonic distortion emulates a resistive load, forcing its input current to follow the input voltage waveform shape. One of the more popular solutions to providing sinusoidal input currents is the so-called conventional boost converter, an example of which is depicted in FIG. 1. The boost converter 10 includes an input diode bridge with rectifiers (e.g., diodes $D_1$, $D_2$, $D_3$, $D_4$), a boost inductor ($L_1$), a controlled switching device ($S_1$), a boost diode ($D_1$), a filter capacitor ($C_o$), and a load (R), which in FIG. 1 is represented by a resistor but may be another device, including a downstream converter (e.g., an isolated DC-DC converter used to regulate a DC voltage supplied to the actual end user load or DC current to charge a battery). The boost converter 10 may be suitably controlled to withdraw a nearly sinusoidal AC input current, which results in close to unity power factor.

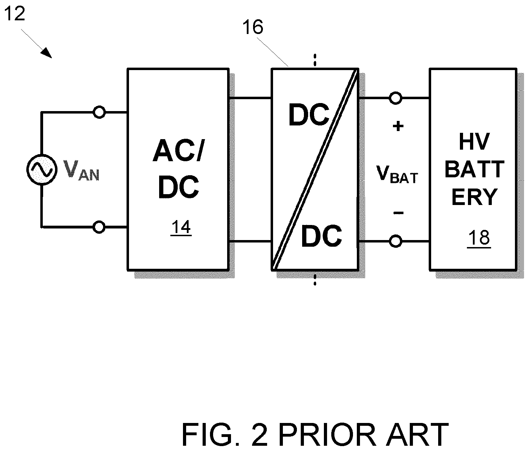

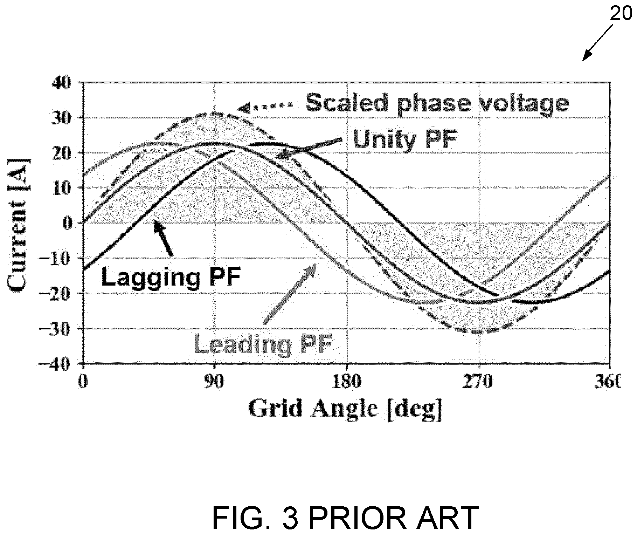

Most EVs are equipped with an on-board charger (OBC), which may be used to charge the car battery either at work or at home or at other venues. In general, the EV draws energy from the AC grid through an on-board charger (OBC) and charges the power battery after the electric energy is transformed. As a simple illustration, a 100-kWh battery pack may be charged in approximately 14 hours with a 7-kW OBC. The input power supply of an OBC may include a single-phase AC voltage, or in some circumstances, a three-phase AC voltage. FIG. 2 shows a single-phase (1-ph) EV OBC system 12, which in this example, includes an AC/DC rectifier 14, DC/DC converter 16, and a high voltage (HV) battery 18. In a power factor correction (PFC) mode, the AC/DC rectifier 14 shapes the input current such that the DC/DC converter 16 acts as a resistor. That is, input currents have the same sinusoidal shape as the grid voltage and there is no phase displacement between voltage and current. Unlike in the PFC mode, non-unity power factor operation, such as shown in an example input current versus grid angle diagram 20 of FIG. 3, is exhibited by a phase current that has a pre-determined displacement angle $\theta\_vi$ from the grid voltage, resulting in a power factor of $PF = cos(\theta_{vi})$. As shown by the labels overlaid on the diagram 20, the waveforms represent unity power factor, leading power factor, and lagging power factor phase currents. The waveform with a dashed line represents a scaled phase voltage waveform.

Typical power factor requirements or specifications for distributed energy resources (DERs), including wind turbines and solar plants, is about 0.95 (leading and lagging) (see, e.g., A. Ellis, R. Nelson, E. Von Engeln, R. Walling, J. MacDowell, L. Casey, E. Seymour, W. Peter, C. Barker, B. Kirby, et al., "Reactive power performance requirements for wind and solar plants," in 2012 IEEE power and energy society general meeting, pp. 1-8, IEEE, 2012). A study in Australia also employed a power factor of 0.8, both capacitive and inductive (see, e.g., D. Condon and D. McPhail, "Voltage regulation of distribution networks using inverter reactive power functionality - Australian utility experience," in 2015 IEEE PES Asia-Pacific Power and Energy Engineering Conference (APPEEC), pp. 1-5, 2015). Until around the year 2022, onboard EV chargers did not need to provide reactive power capability. However, as renewable energy sources increase their penetration throughout the electrical grid, some reactive power compensation requirements or specifications have arisen for relatively small units, such as 22-kW EV OBCs. Reactive power compensation provides or absorbs reactive current, and thereby regulates the voltage at the point of connection to a power grid. This evolution is not so dissimilar to the grid requirements for wind turbines and solar power plants, which started with simple active power injection before moving to frequency control and weak-grid support (see, e.g., "Inverter-based resource performance and analysis, technical workshop, NERC IRPT meeting, February 2019."https://www.nerc.com/comm/PC/IRPTF%20Workshops/ IRPTF_Workshop_Presentations.pdf. Accessed: 2022-07-12).

**SUMMARY OF THE INVENTION**

In accordance with an aspect of the present disclosure, there is provided a method of operating a three-phase/single-phase compatible AC/DC converter. The three-phase/single-phase compatible AC/DC converter includes plural relays that, when selectively activated or deactivated, enables operation as a three-phase converter or a totem-pole power factor correction (PFC) converter with a single-phase input. The totem-pole PFC converter has a parallel arrangement of a diode leg and slow leg connected at their respective midpoints to neutral so as to operate in unity power factor or non-unity power factor. The method of operating a three-phase/single-phase compatible AC/DC converter includes: operating plural fast legs at a first duty cycle for a period defined by a predefined range of an input voltage, and at least a second duty cycle outside of the period different than the first duty cycle for non-unity power factor cases; and increasing a switching frequency of the slow leg during the period while in non-unity power factor operation.

In accordance with another aspect of the present disclosure, there is provided a method of operating a three-phase/single-phase compatible AC/DC converter. The three-phase/single-phase compatible AC/DC converter includes plural inductors coupled to plural fast legs and further having a relay that, when connected to a midpoint of a diode unfolder leg and neutral, enables operation as a totem-pole power factor correction (PFC) converter. The method of operating a three-phase/single-phase compatible AC/DC converter includes: connecting the diode unfolder leg with a leg including a pair of capacitors using a T-type leg, the T-type leg including a pair of active switches; and turning the pair of switches on around AC voltage zero crossings during non-unity power factor operation.

In accordance with a further aspect of the present disclosure, there is provided a three-phase/single-phase compatible AC/DC converter. The three-phase/single-phase compatible AC/DC converter includes plural relays that, when selectively activated or deactivated, enables operation as a three-phase converter or totem-pole power factor correction (PFC) converter with a single-phase input, wherein for a single-phase input and non-unity power factor operation, the three-phase/single-phase compatible AC/DC converter includes: first, second and third switch legs electrically connected in parallel, each having a first switch midpoint electrically to a corresponding phase of an AC power source through an inductor; a fourth switch leg, electrically connected in parallel to the first, second, and third switch legs, and having a second switch midpoint electrically connected to a common node electrically connected to a neutral terminal of the AC power source; and a diode leg, electrically connected in parallel to the fourth switch leg, and having a diode midpoint electrically connected to the common node.

In accordance with a still further aspect of the present disclosure, there is provided a three-phase/single-phase compatible AC/DC converter. The three-phase/single-phase compatible AC/DC converter includes a relay that, when activated, enables operation as a totem-pole power factor correction (PFC) converter with a single-phase input, wherein for a single-phase input and non-unity power factor operation, the three-phase/single-phase compatible AC/DC converter includes: first, second and third switch legs electrically connected in parallel, each having a switch midpoint electrically to a corresponding phase of an AC power source through an inductor; a diode leg, electrically connected in parallel to the first, second, and third switch legs, and having a diode midpoint electrically connected to a common node electrically connected to a neutral terminal of the AC power source; a capacitor leg, electrically connected in parallel to the electrically connected to a neutral terminal of the AC power source, and having a capacitor midpoint; and two T-type switches, electrically connected in series between the diode midpoint and the capacitor midpoint.

These and other aspects of the invention will be apparent from and explained with reference to the embodiment(s) described hereinafter.

## BRIEF DESCRIPTION OF THE DRAWINGS

Many aspects of the embodiments of the present invention can be better understood with reference to the following drawings, which are diagrammatic. The components in the drawings are not necessarily to scale, emphasis instead being placed upon clearly illustrating the principles of the embodiments of the present invention. Moreover, in the drawings, like reference numerals designate corresponding parts throughout the several views.

FIG. 1 is a schematic diagram that shows an example boost converter.

FIG. 2 is a schematic diagram that shows an example single-phase, EV OBC system.

FIG. 3 Is a schematic diagram that shows an example input current versus grid angle diagram reflecting different phase currents according to unity and non-unity power factor operations.

FIGS. 4A-4B are schematic diagrams that show an example three-phase/single-phase compatible circuit that may operate with a three-phase input (FIG. 4A) or single-phase input (FIG. 4B) depending on relay position.

FIG. 5 is a schematic diagram that shows an example single-phase, bridgeless totem-pole rectifier of an OBC with three legs interleaved.

FIGS. 6A-6B are schematic diagrams that show example circuit representations of the single-phase, bridgeless totem-pole rectifier of FIG. 5 for positive input, VAC > 0, IAC > 0 (FIG. 6A) and for negative input, VAC < 0, IAC < 0 (FIG. 6B).

FIGS. 7A-7B are schematic diagrams that include select waveforms that show how unfolding phase leg reconfiguration occurs for a bridgeless totem-pole rectifier operating at unity power factor operation.

FIGS. 8A-8B are schematic diagrams that include select waveforms that show how unfolding phase leg reconfiguration occurs for the bridgeless totem-pole rectifier of FIG. 6 operating at non-unity power factor operation.

FIG. 9 is a schematic diagram that shows a bridgeless totem-pole converter with a T-type leg capable of enabling non-unity power factor operation by switching to T-type operation around voltage zero-crossings.

FIG. 10 is a schematic diagram that shows gating signals for the unfolder and the T-type leg (of FIG. 9) around zero voltage crossings.

FIG. 11 is a schematic diagram that shows an example three-phase/single-phase compatible AC/DC converter configured to implement a control/modulation method that enables non-unity power factor operation, in accordance with an embodiment of the invention.

FIG. 12 is a schematic diagram that shows an example bridgeless totem-pole converter derived, based on activation/deactivation of relays, from the three-phase/single-phase compatible AC/DC converter of FIG. 11 that is configured to implement a control/modulation method that enables non-unity power factor operation, in accordance with an embodiment of the invention.

FIG. 13 is a schematic diagram that shows interleaved gating signals and boost choke current ripple waveforms for the three PWM-modulated phase legs of the totem-pole converter of FIG. 12, in accordance with an embodiment of the invention.

FIG. 14 is a schematic diagram that shows some select waveforms of a control/modulation method that enables operating at non-unity power factor by actively modulating an unfolding phase leg, in accordance with an embodiment of the invention.

FIG. 15 is a schematic diagram that further expands on FIG. 14 by showing a duty ratio of the PWM-modulated phase legs, in accordance with an embodiment of the invention.

FIG. 16 is a schematic diagram that shows select line-cycle frequency waveforms showing input voltage VAC, input current reference (per phase), the duty ratios of PWM-modulated phase legs, the voltage at the midpoint of the unfolding phase leg, the boost choke $L_1$, $L_2$ and $L_3$ currents, and the total input current IAC, in accordance with an embodiment of the invention.

FIG. 17 is a schematic diagram that shows example gating of switches $S_N$ and $S_P$ in the unfolding phase leg, in accordance with an embodiment of the invention.

FIGS. 18A and 18B are schematic diagrams that show another control/modulation method of achieving reactive power control by switching the slow leg such that the voltage between the mid points of the two legs are VDC, 0 and -VDC in one switching cycle, referred to as bipolar switching, in accordance with an embodiment of the invention.

FIG. 19 is a schematic diagram that shows an example three-phase/single-phase compatible AC/DC converter with an unfolder leg that includes two diodes and a T-type leg having two active switches and a relay to switch from DC bus midpoint to unfolder leg midpoint depending on three-phase and single-phase configurations, in accordance with an embodiment of the invention.

FIG. 20 is a schematic diagram that shows an example totem-pole converter derived, based on a relay configuration, from the three-phase/single-phase compatible AC/DC converter of FIG. 19 with the unfolder leg including two diodes and the T-type leg having two active switches, in accordance with an embodiment of the invention.

FIG. 21 is a schematic diagram that shows the timing for gate signal generation of the T-type leg in case of leading power factor, in accordance with an embodiment of the invention.

FIG. 22 is a schematic diagram that shows the variation of phase angle at which T-type gate signals are enabled ($\omega$T1) with variation of phase-shift from approximately 0.8-0.95 leading, in accordance with an embodiment of the invention.

FIG. 23 is a schematic diagram that shows the variation of phase angle at which T-type gate signals are enabled (wT2) with variation of phase-shift from approximately 0.8-0.95 lagging, in accordance with an embodiment of the invention.

FIGS. 24A-24B are schematic diagrams that show some select waveforms during non-unity power factor operation at power factor of 0.9 leading operation, including with zoom-in, when AC current and voltage are in opposite direction, in accordance with an embodiment of the invention.

FIGS. 25A-25B are schematic diagrams that show some select waveforms during non-unity power factor operation at power factor of 0.9 lagging operation, including with zoom-in, when AC current and voltage are in opposite direction, in accordance with an embodiment of the invention.

FIGS. 26A-26B show simulation results for some select waveforms during non-unity power factor operation at power factors of 0.796 and 0.955 leading, respectively, in accordance with an embodiment of the invention.

FIGS. 27A-27B show simulation results for some select waveforms during non-unity power factor operation at power factors of 0.796 and 0.955 lagging, respectively, in accordance with an embodiment of the invention.

FIG. 28 is a schematic diagram that shows an example three-phase/single-phase AC/DC converter and control system for closed-loop control with fractional switching, in accordance with an embodiment of the invention.

FIG. 29 is a schematic diagram that shows an example three-phase/single-phase AC/DC converter and control system for closed loop control with T-type leg switches, in accordance with an embodiment of the invention.

## DETAILED DESCRIPTION OF EMBODIMENTS

Certain embodiments of a three-phase/single-phase compatible AC/DC converter are disclosed that enable non-unity power factor operation. In one embodiment, the three-phase/single-phase compatible AC/DC converter is configured to operate as a single-phase, bridgeless totem pole PFC circuit for single-phase inputs for non-unity power factor operation. Existing compatible circuits also operate as totem-pole PFC circuits in single-phase operation, but cannot work with non-unity power factor due at least in part to the reconfiguration of the unfolding phase leg.

In some embodiments of the three-phase/single-phase compatible AC/DC converter, the typically line-frequency voltage unfolding phase leg is temporarily switched at a high frequency to provide a degree of freedom and thus controllability of the non-zero phase current when input phase voltage is zero or close to zero. By doing so, the converter (rectifier) may operate with non-unity power factor, thereby making it compatible with future electric grid requirements.

In some embodiments of the three-phase/single-phase compatible AC/DC converter, at least two switches are added between a diode unfolder leg and a DC bus mid-point, thus making it a T-type totem pole bridgeless PFC circuit or device. The T-type leg is activated near AC zero voltage crossings and when the AC voltage and current are opposite in polarity. This provides a suitable voltage across the inductor for building up current near the zero voltage crossings. Also, when AC current and voltage are opposite in polarity, the T-type leg is turned on to conduct current in the opposite direction. This enables the converter (rectifier) to operate with non-unity power factor, thereby making it compatible with future electric grid requirements. Further, the non-unity power factor operation is achieved using only low-cost diodes in the unfolder leg, thus reducing cost and control complexity.

Having summarized certain features of a three-phase/single-phase compatible AC/DC converter of the present disclosure, reference will now be made in detail to the description of a three-phase/single-phase compatible AC/DC converter as illustrated in the drawings. Further, although the description identifies or describes specifics of one or more embodiments, such specifics are not necessarily part of every embodiment, nor are all of any various stated advantages necessarily associated with a single embodiment. On the contrary, the intent is to cover alternatives, modifications and equivalents included within the principles and scope of the disclosure as defined by the appended claims. Though emphasis is on a three-phase/single-phase compatible circuit, in some embodiments, portions of certain device embodiments may represent solutions to some existing non-unity power factor applications. For instance, single-phase topologies that utilize one or a compatible of the T-type configuration, diodes in the unfolder leg, or temporary high switching of the unfolder leg, may be used in some EV implementations. Also, though emphasis is on EV OBC applications, certain embodiments described herein may be used in other applications, such as power conversion in data center applications. Note that two or more embodiments may be interchanged or combined in any combination. Also, the terms rectifier and converter are used herein interchangeably, recognizing that the term converter is generally understood to be of broader scope. Note that reference to waveform diagrams herein refers to simulated waveform diagrams. Further, it should be appreciated in the context of the present disclosure that the claims are not necessarily limited to the particular embodiments set out in the description.

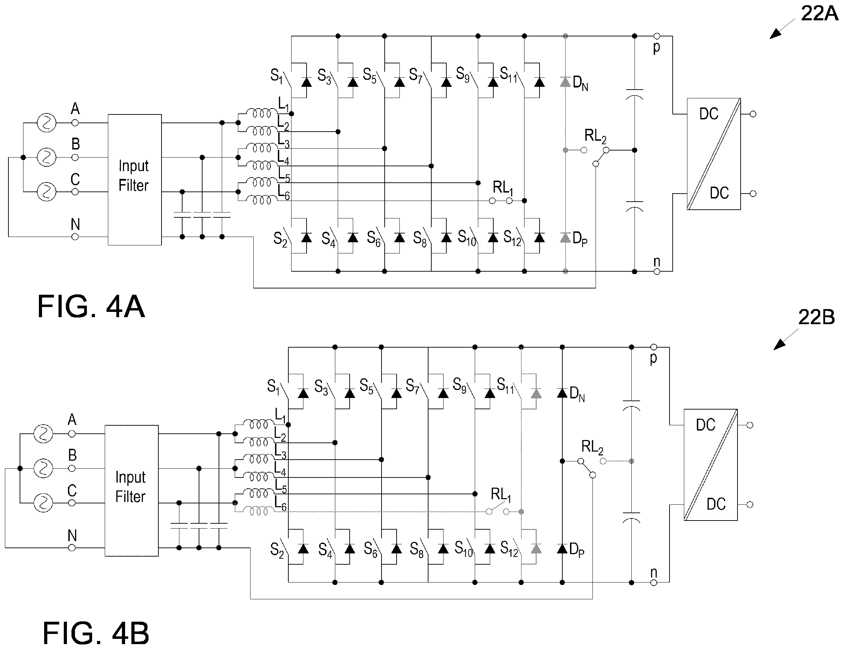

Before proceeding, some additional explanation of some of the challenges to operation under non-unity power factor follows. As explained above, the input power supply of an OBC may include a single-phase AC voltage or a three-phase AC voltage. Currently, many OBCs work under single-phase input conditions, which may result in low output power and/or long charging times. With the increase in the capacity of the power battery of new EVs and the demand for faster charging, there is increasing demand for three-phase input, higher power OBCs. Three-phase/single-phase topologies or architectures generally include a front-stage circuit and a rear-stage, isolated DC-DC circuit. The front-stage PFC circuit may realize PFC while reducing harmonic distortion, providing the rear-stage DC-DC circuit with a smaller ripple DC bus voltage. The rear stage DC-DC circuit may output a stable and adjustable high-voltage DC supply power to the power battery. FIGS. 4A-4B show an embodiment of an example three-phase/single-phase compatible circuit 22 that interfaces a utility grid to a DC/DC converter for EV OBC implementations. The three-phase/single-phase compatible circuit 22 includes three input terminals A, B, C, a neutral terminal N, two output terminals p, n, an input filter, a plurality of boost inductors $L_1, L_2, L_3, L_4, L_5, L_6$, a plurality of capacitors, a plurality of phase legs (also referred to as switch legs, bridge arms, PWM modulated phase legs), a diode leg (also referred to as slow leg), an output filter (also referred to as a capacitor leg) and a plurality relays. The three input terminals A, B, C are connected to the utility grid to receive three-phase AC input or single-phase AC input. The input filter is electrically connected between the three input terminals A, B, C and the plurality of phase legs and configured to filter the AC input. The plurality of phase legs are electrically connected with each other in parallel, and each of the plurality of phase legs includes two switches connected in series, for example an upper switch $S_1$, $S_3, S_5, S_7, S_9, S_{11}$ and a lower switch $S_2, S_4, S_6, S_8, S_{10}, S_{12}$. Preferably but not exclusively, the switch $S_1, S_2, S_3, S_4, S_5, S_6$, $S_7, S_8, S_9, S_{10}, S_{11}, S_{12}$ is a metal oxide semiconductor field effect transistor having an anti-parallel diode. Each phase leg has a midpoint between the upper switch $S_1, S_3, S_5, S_7, S_9, S_{11}$ and the lower switch $S_2, S_4, S_6, S_8, S_{10}, S_{12}$, and the midpoint is electrically connected to a corresponding input terminal A, B, C. Each boost inductor $L_1, L_2, L_3, L_4, L_5, L_6$ is electrically connected between the corresponding input terminal A, B, C and a midpoint of the corresponding phase leg. One terminal of the capacitor is connected to the corresponding boost inductor $L_1, L_2, L_3, L_4, L_5, L_6$ and the corresponding input terminal A, B, C, and the other terminal of the capacitor is connected to the neutral terminal N. The diode leg is electrically connected with the plurality of phase legs in parallel and includes two diodes $D_N, D_P$ connected in series. The diode leg has a midpoint between the two diodes $D_N, D_P$. The output filter is electrically connected with the diode leg in parallel and includes two capacitors connected in series. The output filter has a midpoint between the two capacitors. The plurality of relays includes a first relay $RL_1$ and a second relay $RL_2$. One terminal of the first relay $RL_1$ is connected to one corresponding boost inductor of the plurality of boost inductors $L_1, L_2, L_3, L_4, L_5, L_6$, and the other terminal of the first relay $RL_1$ is connected to a midpoint of one corresponding phase leg of the plurality of phase legs. One terminal of the second relay $RL_2$ is connected to the neutral terminal N, and the other terminal of the second relay $RL_2$ is selectively connected to one of the midpoints of diode leg and the midpoint of the output filter. The three-phase/single-phase compatible circuit 22 may be operated with both three-phase (compatible circuit 22A) and single-phase (compatible circuit 22B) inputs depending on the position (activation/deactivation) of first relay $RL_1$ and the second relay $RL_2$. With a three-phase input, the second relay $RL_2$ is open (i.e., the other terminal of the second relay $RL_2$ is connected to the midpoint of the output filter) and first relay $RL_1$ is closed, as shown by the configuration of the compatible circuit 22A of FIG. 4A. For single-phase input, as shown by the configuration of the compatible circuit 22B of FIG. 4B, the first relay $RL_1$ is open and the second relay $RL_2$ is closed (i.e., the other terminal of the second relay $RL_2$ is connected to the midpoint of diode leg).

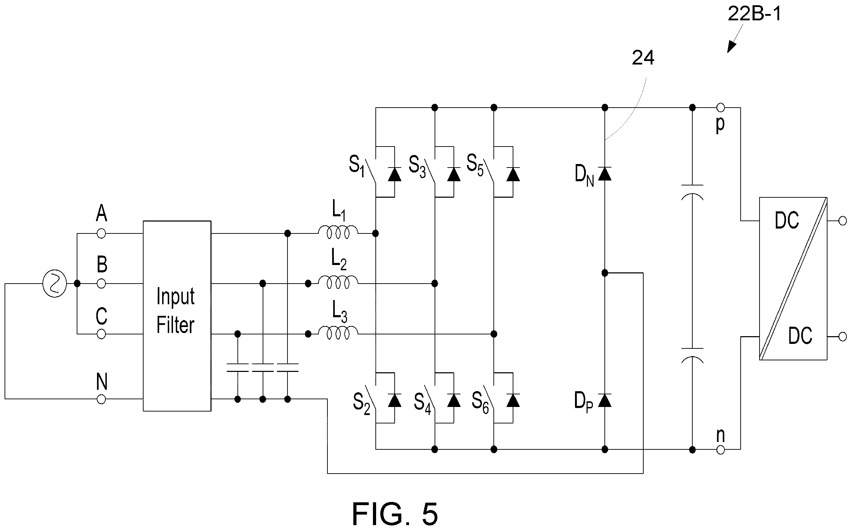

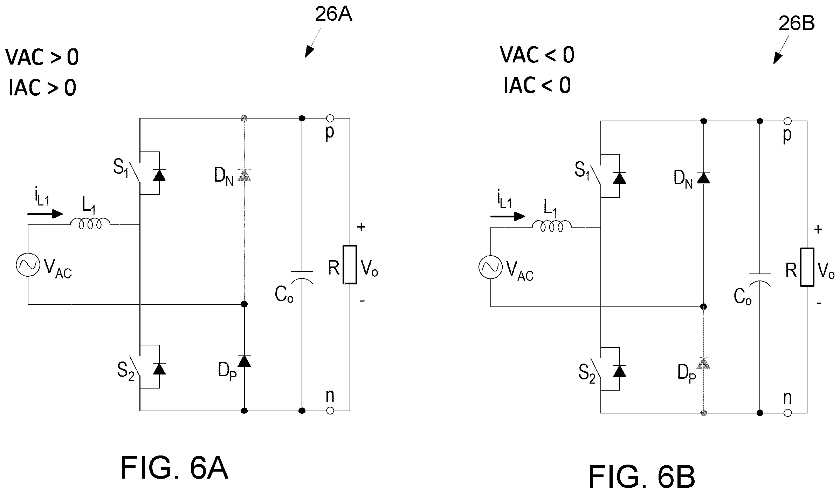

For single-phase input, the compatible circuit 22B operates as a (bridgeless) totem-pole PFC rectifier 22B-1, as shown in FIG. 5. The compatible circuit 22B-1 may interface an OBC with a single-phase grid. In this example, the compatible circuit 22B-1 includes three input terminals A, B, C, a neutral terminal N, two output terminals p, n, an input filter, three boost inductors $L_1, L_2, L_3$, three capacitors, three phase legs (also referred to as switch legs, bridge arms, PWM modulated phase legs), a diode leg (also referred to as slow leg) and an output filter (also referred to as a capacitor leg). The three input terminals A, B, C are configured to receive single-phase AC input. The input filter is electrically connected between the three input terminals A, B, C and the three phase legs. The three phase legs are electrically connected with each other in parallel, and each of the three phase legs includes two switches connected in series, for example an upper switch $S_1, S_3, S_5$ and a lower switch $S_2, S_4, S_6$. Each phase leg has a midpoint between the upper switch $S_1, S_3, S_5$ and the lower switch $S_2, S_4, S_6$, and the midpoint is electrically connected to a corresponding input terminal A, B, C. Each boost inductor $L_1, L_2, L_3$ is electrically connected between the corresponding input terminal A, B, C and a midpoint of the corresponding phase leg. One terminal of the capacitor is connected to the corresponding boost inductor $L_1, L_2, L_3$ and the corresponding input terminal A, B, C, and the other terminal of the capacitor is connected to the neutral terminal N. The diode leg is electrically connected with the three phase legs in parallel and includes two diodes $D_N, D_P$ connected in series. The diode leg has a midpoint between the two diodes $D_N, D_P$. The output filter is electrically connected with the diode leg in parallel and includes two capacitors connected in series. The midpoint of the diode leg is electrically connected to the neutral terminal N, which is electrically connected to the common node of the neutral of the utility grid. In some embodiments, three phase legs (e.g., from left to right in FIG. 5, first phase leg with complementary switches $S_1, S_2$, second phase leg with complementary switches $S_3, S_4$, and third phase leg with complementary switches $S_5, S_6$) carry current of equal amplitude. These three phase legs operate at high frequency with boost inductors (chokes) $L_1, L_2$ and $L_3$, and are interleaved such that the high frequency ripple is reduced on the grid AC current. However, the single-phase, bridgeless totem-pole rectifier 22A-1 does not natively support reactive power flow. This is due to the nature of the slow leg 24 of the totem-pole PFC circuit (e.g., the leg including diodes $D_N$ and $D_P$ in FIGS. 5, 6A, and 6B), also referred to in the power conversion industry as an unfolding (or unfolder) phase leg 24, and its connection to the grid neutral, as described further below. Referring to example circuit representations 26A, 26B of the rectifier 22A-1 in FIGS. 6A (for positive input, VAC > 0, IAC > 0) and 6B (for negative input, VAC < 0, IAC < 0), respectively, the unfolding phase leg 24 periodically reconnects the neutral point (N) of the grid voltage between the DC link negative (n), as shown by circuit representation 26A in FIG. 6A, and positive (p) rails, as shown by circuit representation 26B in FIG. 6B, such that the grid voltage is always positive with respect to the DC link negative potential. More generally, for unity power factor, VAC and IAC are in phase and $D_P$ conducts when VAC and IAC are positive (FIG. 6A) and $D_N$ conducts when VAC and IAC are negative (FIG. 6B). This reconfiguration allows the PWM-modulated phase leg to regulate grid current. Note that only one of the PWM phase legs are shown for brevity.

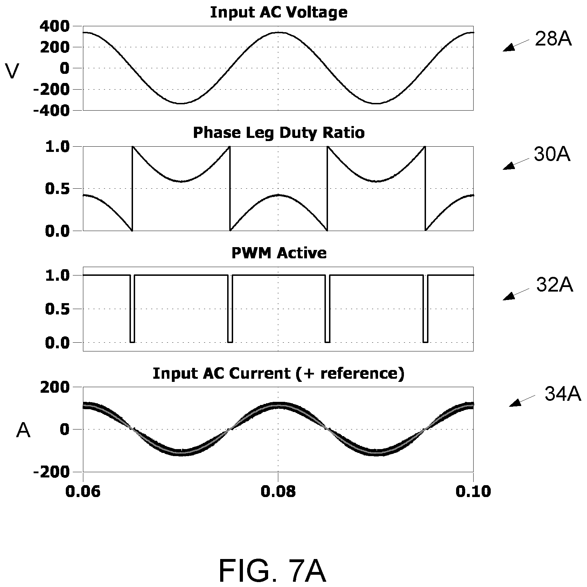

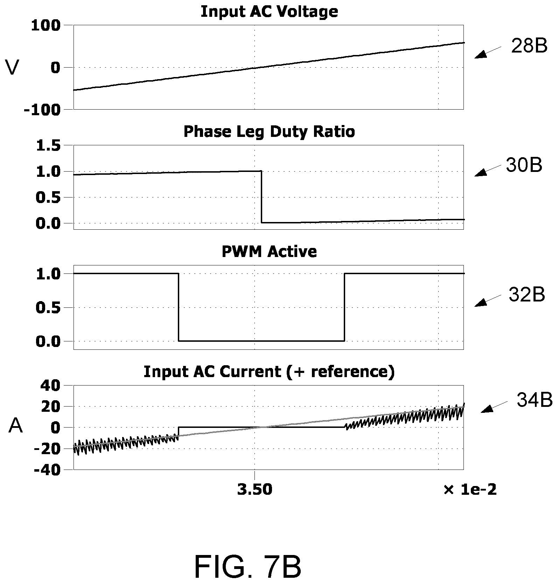

Reference is made now to FIGS. 7A-7B, which illustrates how unfolding phase leg reconfiguration occurs for a bridgeless totem-pole rectifier operating at unity power factor. FIGS. 7A-7B show several waveform diagrams, with the diagrams referenced with the suffix B, in FIG. 7B, showing a close-up view of the correspondingly-numbered diagrams (with suffix A) in FIG. 7A. From top to bottom in FIGS. 7A-7B, shown is an input AC voltage waveform diagram 28 (e.g., 28A, 28B), phase leg (PWM-modulated) duty ratio waveform diagram 30 (e.g., 30A, 30B), PWM active waveform diagram 32 (e.g., 32A, 32B), and input AC current (+ reference), or total input current, waveform diagram 34 (e.g., 34A, 34B). Notably, the input AC current refers to the actual measured current, and the reference refers to the controller reference. As shown in the input AC voltage waveform diagram 28A and the phase leg duty ratio waveform diagram 30A in FIG. 7A, the unfolding phase leg reconfiguration occurs when input AC voltage, and therefore AC current (referring to input AC current + reference waveform diagram 34A), changes polarity. If the power factor is unity (i.e., the shapes, but not necessarily the magnitudes, of voltage and current waveforms are equal), the modulation of the PWM phase leg (e.g., the leg with switches $S_1$ and $S_2$ in FIGS. 6A-6B) is turned off (e.g., as shown in the PWM active waveform diagram 32A) during the reconfiguration of the unfolding phase leg, which is typically a number of PWM periods as illustrated in PWM active waveform diagram 32B in FIG. 7B. If diodes $D_P$ and $D_N$ in FIG. 5 are replaced with controllable switches, the unfolding phase leg midpoint voltage may be actively controlled, as opposed to being passively forced by the input AC current (e.g., positive input current forward-biases diode $D_P$ and negative input current forward biases diode $D_N$). However, while the unfolding phase leg may theoretically be reconfigured with control signals in a single switching cycle, measurement errors and filter delays in input voltage sensing as well as controller delays make such an approach impractical. Thus, no gating signals are typically applied around zero AC voltage crossings. No modulation around zero AC voltage results in zero phase current. However, since the ideal input current is relatively small, the impact on the total harmonic distortion (THD) of the phase current is relatively minor.

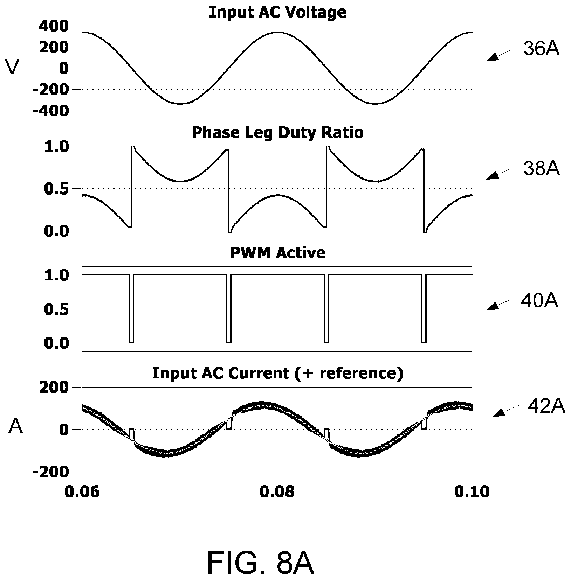

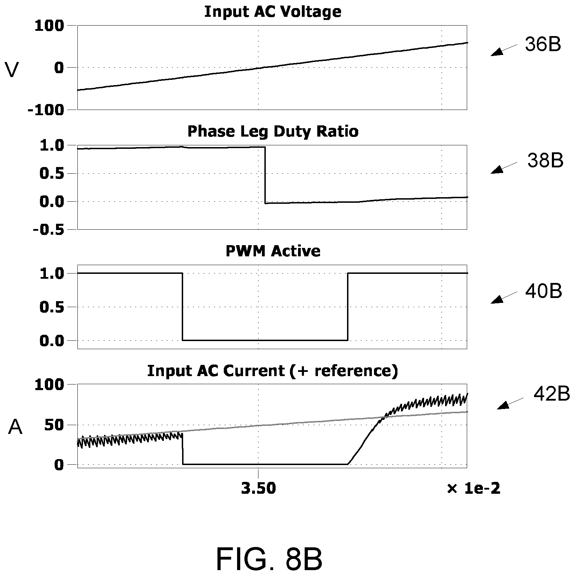

FIGS. 8A-8B show waveform diagrams similar to those shown in FIGS. 7A-7B, yet for non-unity power factor operation, and include (from top to bottom) input AC voltage waveform diagram 36 (e.g., 36A, 36B), phase leg (PWM-modulated) duty ratio waveform diagram 38 (e.g., 38A, 38B), PWM active waveform diagram 40 (e.g., 40A, 40B), and input AC current (+ reference), or total input current, waveform diagram 42 (e.g., 42A, 42B). When the power factor is non-unity, the turning off of the PWM phase leg around zero voltage crossings may result in a significant disturbance of non-zero phase current, as shown in the input AC current + reference waveform diagrams 42A (FIG. 8A) and 42B (FIG. 8B).

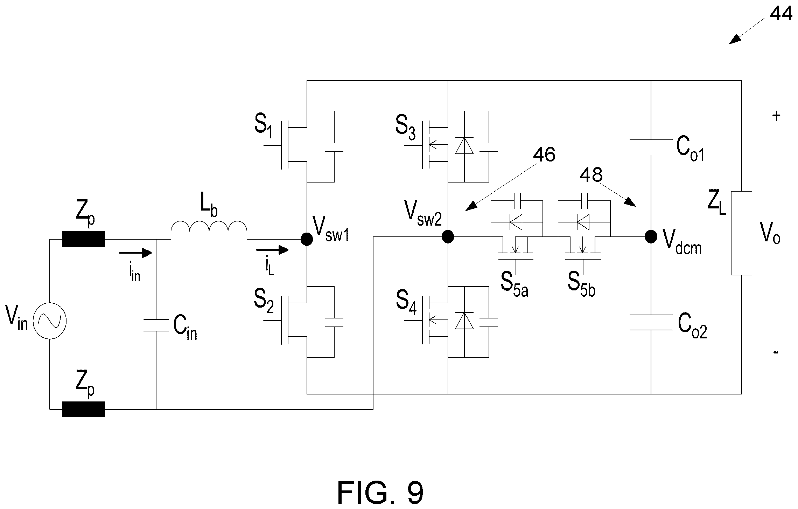

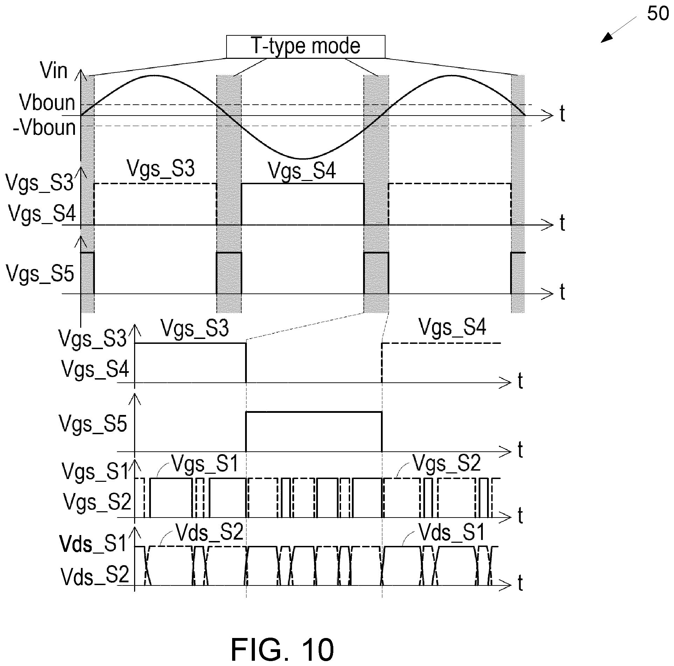

From observations of FIGS. 8A-8B, it is noted that for the representations 26A, 26B of FIGS. 6A-6B, when VAC and IAC are out of phase, $D_P$ and $D_N$ cannot conduct current, so an additional path is needed for the current to flow. One approach to non-unity power factor operation for a single-phase totem pole PFC circuit or device (e.g., rectifier) operating in critical conduction mode (CRM) is discussed in "Single-Phase GaN-Based T-Type Totem-Pole Rectifier With Full-Range ZVS Control and Reactive Power Regulation," in IEEE Transactions on Power Electronics, vol. 38, no. 2, pp. 2191-2201, Feb. 2023, doi: 10.1109/TPEL.2022.3215969 by J. Sun, L. Zhu, R. Qin, D. J. Costinett and L. M. Tolbert. In this article, and with reference to the circuit 44 in FIG. 9, one solution is to connect two MOSFETs ($S_3$ and $S_4$) in the unfolder leg that can conduct current in both directions. However, as discussed in that article, even with these switches, when VAC is approximately equal to 0, the voltage is not enough to build the current for non-unity power factor cases. The article further proposes a bridgeless, totem-pole converter having a T-type configuration, including two more active switches ($S_{5a}$ and $S_{5b}$) connected between an unfolder leg AC point 46 and a DC bus midpoint 48. The T-type switches $S_{5a}$ and $S_{5b}$ are activated only around zero voltage crossings. This arrangement may help in building the required voltages across the inductor around zero crossings of the AC voltage and further assist in current shaping (see, e.g., FIG. 10), thus achieving the required current. In effect, the circuit 44 including a bridgeless, totem-pole converter with T-type leg is capable of enabling non-unity power factor operation by switching to T-type operation around zero-voltage crossings. The operation remains the same when the voltage magnitude is above a boundary voltage $|V_{bound}|$, and $S_1$ and $S_2$ operate at high frequency while unfolder leg (slow leg) active switches $S_3$ and $S_4$ are continuously turned on or off depending on the voltage direction as shown by the device switching sequence diagram 50 of FIG. 10. For instance, the device switching sequence diagram 50 shows the gating signals for the unfolder and T-type leg around the zero voltage crossings.

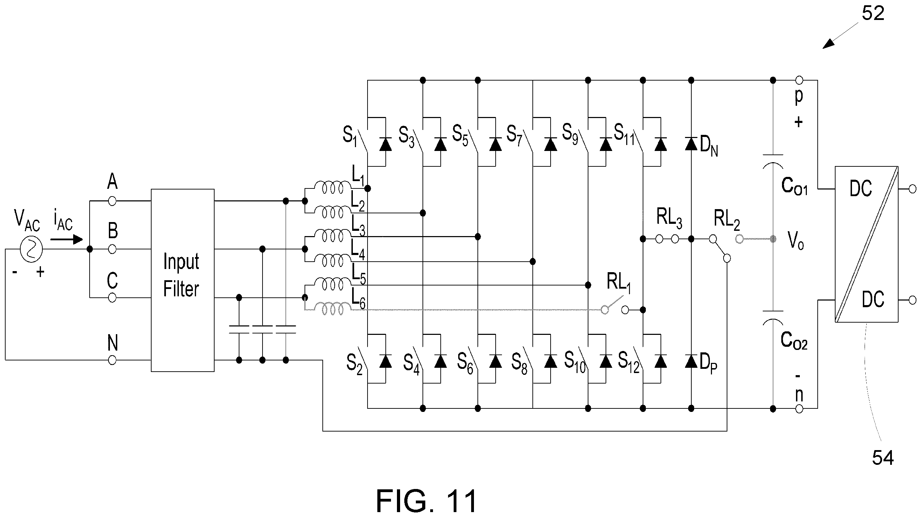

Attention is now directed to FIG. 11, which shows an embodiment of an example three-phase/single-phase compatible AC/DC converter 52 that interfaces a utility grid to a DC/DC converter 54 for EV OBC implementations, while enabling operation under non-unity power factor operation. The three-phase/single-phase compatible AC/DC converter 52 shares some similarities in topology to the three-phase/single-phase compatible circuit 22 shown in FIGS. 4A and 4B, wherein the same references represent the same components and/or functions, and would not be repeatedly described hereinafter. Different from the three-phase/single-phase compatible circuit 22 shown in FIGS. 4A and 4B, the three-phase/single-phase compatible AC/DC converter 52 additionally includes a third relay $RL_3$ connected between a fast switch leg (e.g., the last fast switch leg including switches $S_{11}$ and $S_{12}$) and the slow leg (e.g., the diode leg including diodes $D_N$ and $D_P$). The three-phase/single-phase compatible AC/DC converter 52 may be operated with both three-phase and single-phase inputs depending on the position (activation/deactivation) of the first relay $RL_1$, the second relay $RL_2$ and the third relay $RL_3$.

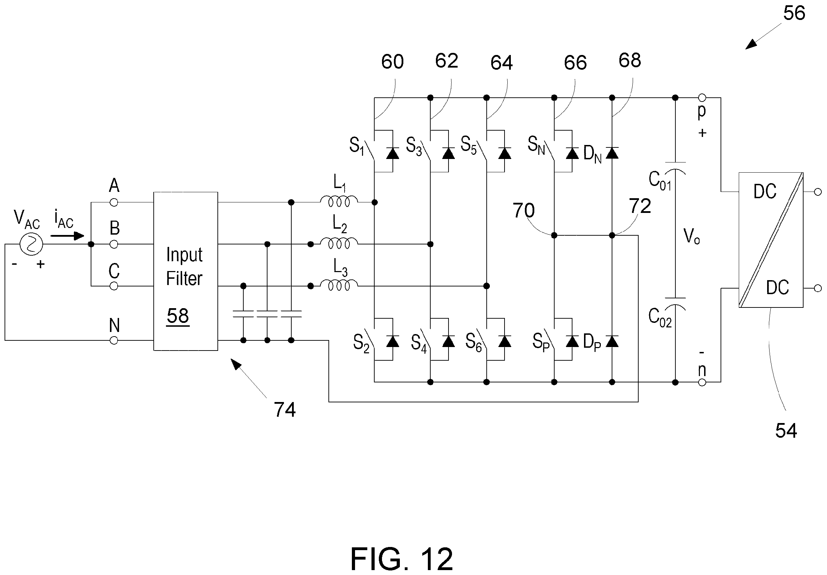

With a single-phase input, the first relay $RL_1$ is open, the second relay $RL_2$ is closed (i.e., the other terminal of the second relay $RL_2$ is connected to the midpoint of the diode leg) and the third relay $RL_3$ is closed. The three-phase/single-phase compatible AC/DC converter 52 operates as a totem-pole, PFC converter 56 for single-phase, non-unity power factor operation, as shown in FIG. 12. The totem-pole, PFC converter 56 interfaces the utility grid to the DC/DC converter 54. The totem-pole, PFC converter 56 receives the utility grid input (VAC, IAC) at an input filter 58, and resulting currents in boost chokes (inductors) $L_1$ through $L_3$ may be interleaved in single-phase operation. Note that in some embodiments, a different quantity (e.g., less or more than three) chokes may be used. For the example topology depicted in FIG. 12, the totem-pole, PFC converter 56 includes first phase leg 60 (also referred to as first switch leg having complementary switches $S_1$ and $S_2$), second phase leg 62 (also referred to as second switch leg having complementary switches $S_3$ and $S_4$), and third phase leg 64 (also referred to as third switch leg having complementary switches $S_5$ and $S_6$), a fourth phase leg (also referred to as a slow leg or unfolder or unfolding phase leg, having switches $S_N$ and $S_P$), and a diode phase leg (having diodes $D_N$ and $D_P$, also referred to as diode leg, unfolding or unfolder leg diodes). Note that the terms unfolder and unfolding are used herein interchangeably. To simplify the analysis of operation, it is assumed that output capacitances $C_{O1}$ and $C_{O2}$ of a capacitor leg are high enough such that output voltage $V_O$ can be considered reasonably constant throughout an AC line cycle.

A midpoint 70 of the fourth phase leg 66 is connected to a midpoint 72 of the diode phase leg 68, and the two midpoints 70, 72 are connected to the filter capacitor neutral via point 74. In general, the body diodes of switches $S_N$ and $S_P$ of the fourth phase leg 66 have a higher voltage drop compared to external diodes $D_N$ and $D_P$ of the diode phase leg 68. Thus, having diodes $D_N$ and $D_P$ in parallel to switches $S_N$ and $S_P$ reduces the total conduction loss.

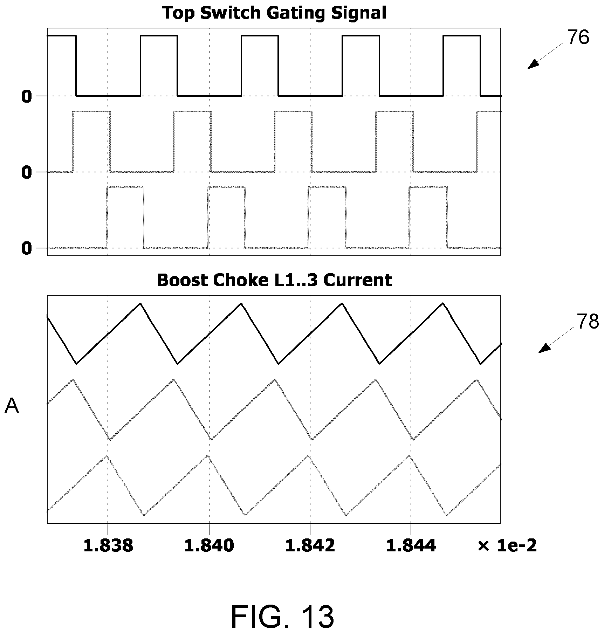

The gating signals (top diagram 76) and relevant boost choke currents (current ripple waveforms, bottom diagram 78) for the three PWM-modulated phase legs 60, 62, and 64 for single-phase operation for the totem-pole, PFC converter 56 are shown in FIG. 13.

Explaining example operations under unity power factor, when both input AC voltage VAC and input AC current IAC are positive, and switches $S_N$ and $S_P$ of the fourth phase leg 66 are not turned on, diode $D_P$ of the diode phase leg 68 is forward-biased and conducts current IAC. Similarly, when both input AC voltage VAC and input AC current IAC are negative, and switches $S_N$ and $S_P$ of the fourth phase leg 66 are not turned on, diode $D_N$ of the diode phase leg 68 is forward-biased and conducts current IAC. For standard operation with unity power factor, switches $S_N$ and $S_P$ of the fourth phase leg 66 do not have to operate since diodes $D_P$ and $D_N$ of the diode phase leg 68 automatically unfold input voltage VAC. However, it may be beneficial to turn on switch $S_P$ of the fourth phase leg 66 when diode $D_P$ of the diode phase leg 68 is forward-biased to provide an additional path for input current IAC and thus reduce the conduction loss. Similarly, switch $S_N$ of the fourth phase leg 66 may be turned on when diode $D_N$ of the diode phase leg 68 is forward-biased. In this case, switches $S_N$ and $S_P$ of the fourth phase leg 66 act as synchronous rectifiers.

Explaining operations for when power factor is not unity, input current IAC may be either negative or positive regardless of the polarity of input voltage VAC, as shown in FIG. 3. The automatic input voltage unfolding by diodes $D_P$ and $D_N$ no longer works since the polarities of voltage VAC and current IAC are not the same for the entire half-line cycle.

One possible approach is to force the unfolding of input voltage VAC with gating of switches $S_N$ and $S_P$ of the fourth leg 66 in FIG. 12. That is, when input voltage is positive, activate switch $S_P$, and when input voltage is negative, activate switch $S_N$. This behavior is distinctly different from the operation as synchronous rectifiers since no lapse in gating is allowed (e.g., gating lapses are needed when synchronous rectifiers are operated at 50/60 Hz). Synchronous rectifiers for unfolding phase legs are typically turned on with a delay of several switching cycles to prevent issues with sensing the polarity of input voltage VAC.

To enable continuous modulation of input current, the reconfiguration of the fourth phase leg 66 including switches $S_N$ and $S_P$ should be done within a single switching cycle. This brings about two issues:

1) Aforementioned issues with polarity sensing of input voltage - there are sensor, filters, sampling, and computational delays to consider. Should the voltage, even temporarily, be of the wrong polarity, the rectifier will lose current regulation.

2) Even if input voltage VAC is unfolded correctly, the PWM-modulated phase legs 60-64 (having switches $S_1..S_6$) do not have enough voltage margin to fully control the input current to the desired setpoint. Consider the following scenario, where input voltage VAC is just marginally positive (e.g., VAC = 0.01V), switch $S_P$ is activated, and commanded current IAC is negative (e.g., leading PF, grid angle = 180 degrees in FIG. 3). Since switch $S_P$ is turned on, the unfolding phase midpoint is clamped to the negative rail of the DC link, and thus its voltage is 0 V. To force current IAC negative, the voltage across boost chokes $L_1...L_3$ needs to be negative. However, when top switch $S_1$ is turned on, the voltage across boost choke $L_1$ is $(V_O - VAC) \sim V_O$. When bottom switch $S_2$ is turned on, the voltage across the boost choke $L_1$ is $(-VAC) \sim -0.01$ V. Thus, not enough negative voltage is available in the system to successfully control input current IAC.

In one embodiment, to enable continuous modulation and to maintain current control around zero AC voltage crossings, operation of the PWM-modulated phase legs 60, 62, 64, and 66 at extreme duty ratios (e.g., < 1% and > 99% in one embodiment, or, not at 0% or 100%) is to be avoided. In one embodiment, this is achieved by operating the phase legs 60, 62, 64, and 66 in such a manner as to keep the unfolding phase average voltage to be at a non-extreme value between 0 V and $V_O$.

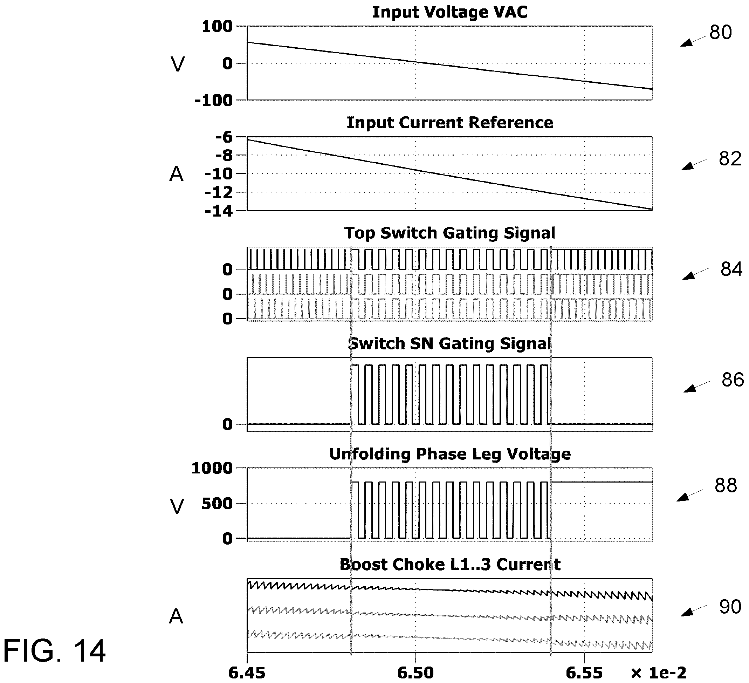

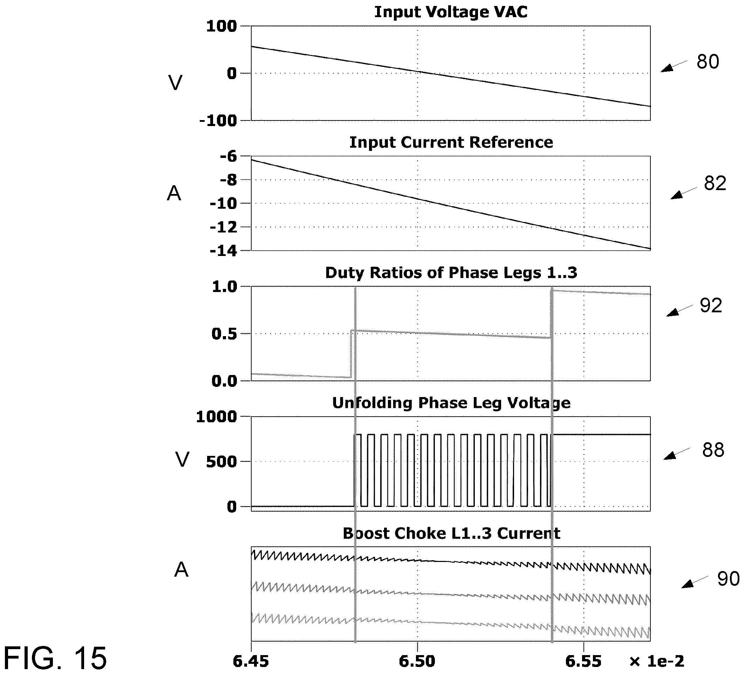

Attention is directed to FIGS. 14 and 15. FIG. 14 shows select waveforms that illustrate an embodiment of a modulation method that enables operation of the totem-pole, PFC converter 56 (FIG. 12) at non-unity power factor by actively modulating the fourth or unfolding phase leg 66. The waveform diagrams of FIG. 14 include input voltage VAC 80, input current reference 82, top switch gating signal 84, switch $S_N$ gating signal 86 (e.g., derived from the controller), unfolding phase leg voltage 88 (e.g., measured from the converter circuit), and boost choke $L_1...L_3$ current 90. FIG. 15 includes the same waveform diagrams of FIG. 14 and further expands upon those diagrams by showing duty ratios of the PWM modulated phase legs waveform 92 (e.g., for phase legs 60, 62, and 64). In FIG. 14 (and FIG. 15), and referring to the waveform diagram 88, the unfolding phase leg voltage starts at 0 V (when VAC > +25 V), then it transitions to the average value of about $V_O/2$ (a period when -25 V < VAC < 25 V), and finally increases to $V_O$ (when VAC < -25 V). Furthermore, it can be seen from the waveform diagram 84 that the top switch gating signals of the three PWM-modulated phase legs also transition from low duty cycle (when VAC > 25 V) to about 50% + VAC/VO duty cycle (when -25 V < VAC < 25 V) to high duty cycle (when VAC < -25 V). However, the duty ratios, which are depicted in the waveform diagram 92 of FIG. 15 (the duty ratios of the three PWM-modulated phase legs 60, 62, and 64 are essentially equal), are not extreme - that is, not at 0% or at 100% (e.g., not < 1% or > 99%). As an example, the minimum duty ratio is 4% while the highest duty ratio is 96%. As a result, the current controller of the totem-pole, PFC converter 56 (FIG. 12) does not lose regulation.

The region or period where the unfolding phase leg voltage is being actively modulated is referred to herein as the N+1 region, denoting N actively modulated PWM-modulated phase legs (e.g., for phase legs 60, 62, and 64) and 1 actively modulated unfolding phase leg (e.g., phase leg 66). In this example, there are three actively modulated PWM-modulated phase legs 60, 62, and 64. However, in some embodiments, N may be any practical number (e.g., 1-10).

Table 1 (below) shows the approximate duty ratio of the PWM-modulated and unfolding phase legs throughout the line cycle. In general, Table 1 reflects the region of operation selected based on the phase angle of VAC. Note that the values of $\theta_{TR1}$ and $\theta_{TR2}$ depend on the circuit implementation and its limitations. For instance, in one embodiment, these values are within a range such that VAC is less than approximately 8-10% $VAC_{MAX}$. $\theta_{VAC}$ is the angle of the grid, denoted in degrees. In this particular example, $\theta_{TR1} = \theta_{TR2} = 5$ degrees. The duty ratio of the PWM phase leg may be further adjusted by additional feedforward terms and a feedback controller in a physical, non-ideal system.

TABLE 1

| | $\theta_{VAC} < \theta_{TR1}$ | $\theta_{TR1} < \theta_{VAC} <$ 180 - $\theta_{TR2}$ | 180 - $\theta_{TR2} < \theta_{VAC} <$ 180 + $\theta_{TR1}$ | 180 + $\theta_{TR1} < \theta_{VAC}$ < 360 - $\theta_{TR2}$ |
|---|---|---|---|---|
| Approximate PWM phase leg duty ratio | $\frac{V_{AC}}{V_O} + 0.5$ | $\frac{V_{AC}}{V_O}$ | $\frac{V_{AC}}{V_O} + 0.5$ | $1 - \frac{V_{AC}}{V_O}$ |
| Unfolding phase leg duty ratio | 0.5 | 0 | 0.5 | 1 |
| Unfolding phase leg voltage | 0.5 $V_O$ | 0 | 0.5 $V_O$ | $V_O$ |

Furthermore, as shown in FIG. 14, the switching frequency is reduced to about one half when the fourth phase leg 66 (e.g., the unfolding phase leg) is being modulated as the rectifier is operating in the N+1 region. While an increased current ripple would normally be expected, the current ripple is in fact kept relatively low since the boost choke now experiences an increased number of voltage transitions per switching cycle as both the PWM-modulated phase legs 60, 62, and 64 and the unfolding phase leg 66 are being modulated. One reason for the decreased switching frequency in the N+1 region is that the fourth phase leg 66 now carries the combined current of the first three phase legs 60, 62, and 64 and thus has increased conduction and switching losses. The reduction of switching frequency in this region subsequently reduces the switching loss. Furthermore, in the N+1 region, the gating signals of PWM-modulated phase legs 60, 62, and 64 are also not phase-shifted with respect to each other; this helps to minimize the overall current ripple since the carriers of both the PWM-modulated legs 60, 62, and 64 and the unfolding phase leg 66 are synchronized.

When SRs are operated at 50/60 Hz, gating lapses are used. For reactive power control, such lapses should not occur even in the unfolding leg. However, when the fast and slow legs are operated at the switching frequencies and according to modulation control similar to that shown in FIGS. 14-15, no lapse is needed.

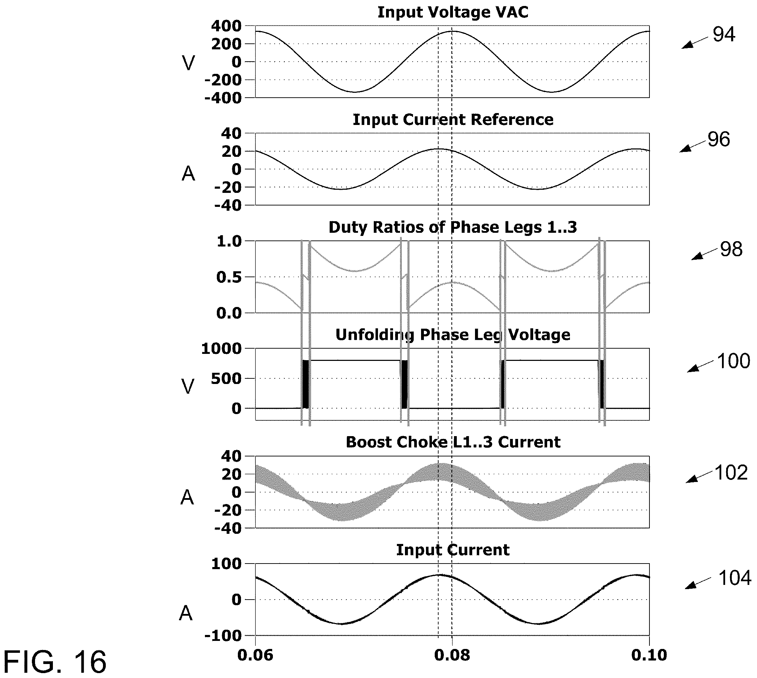

FIG. 16 shows some select line-cycle waveforms, including input voltage VAC 94, input current reference 96, duty ratios of phase legs 98 (e.g., of phase legs 60, 62, and 64), unfolding phase leg voltage 100 (e.g., of phase leg 66), boost choke $L_{1,...,}L_3$ 102, and input current 104. The total input current as shown in waveform diagram 104 in FIG. 16 shows no significant distortion in the N+1 region (where the unfolding phase leg 66 is being modulated), despite the lower switching frequency and no phase-shifting of the carriers of the PWM-modulated phase legs 60, 62, and 64. The two vertical lines (n waveform diagram 98) denote the zero angle of input voltage VAC and zero angle of input current IAC. The power factor in this example is 0.9 leading.

Furthermore, it should be noticed that even though the power factor is 0.9, which is about a 25.7 degree displacement between input voltage VAC and input current IAC, the N+1 region is actually quite narrow, spanning about 10 degrees in the simulation. The N+1 region may be more or less as suits the application and employed hardware. One purpose of the N+1 region is to avoid extreme duty cycles of the PWM-modulated phase legs, which are independent of the required power factor. However, as stated above, when power factor is unity, the current around zero voltage crossings cannot be regulated and thus the PWM-modulated phase legs are simply turned off. This does not impact the input current THD since the commanded current magnitude is very low, as shown in FIG. 7A for unity power factor operation.

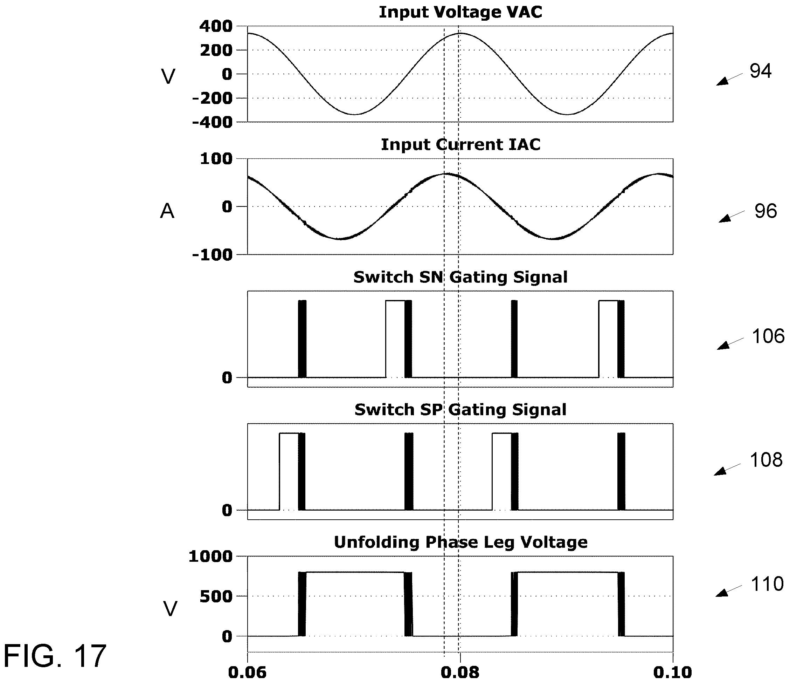

Also, it should be noted that even though the N+1 region duration can be very short, switch $S_N$ of the phase leg 66 should be turned on at a 100% duty cycle when input voltage AC is negative and input current IAC is positive. This is shown in FIG. 17, which in addition to showing the waveform diagrams 94 and 96 of FIG. 16, also shows waveform diagrams for a switch $S_N$ gating signal 106, switch $S_P$ gating signal 108, and the unfolding phase leg voltage 110. If switch $S_N$ was not turned on, diode $D_N$ would be blocking voltage and diode $D_P$ would carry current instead. However, this would result in the unfolding phase voltage to be 0 V instead of $V_O$. Since input AC voltage is negative as well, current regulation would be lost.

Conversely, switch $S_P$ should still be turned on at a 100% duty cycle when input voltage AC is positive and input current IAC is negative. In the remaining cases outside of the N+1 region, where the polarities of input voltage VAC and input current IAC are of equal sign, both switches $S_N$ and $S_P$ can be turned off without the loss of functionality.

Note that the control method described above in association with FIGS. 12-17 may work with any power factor and any current shape.

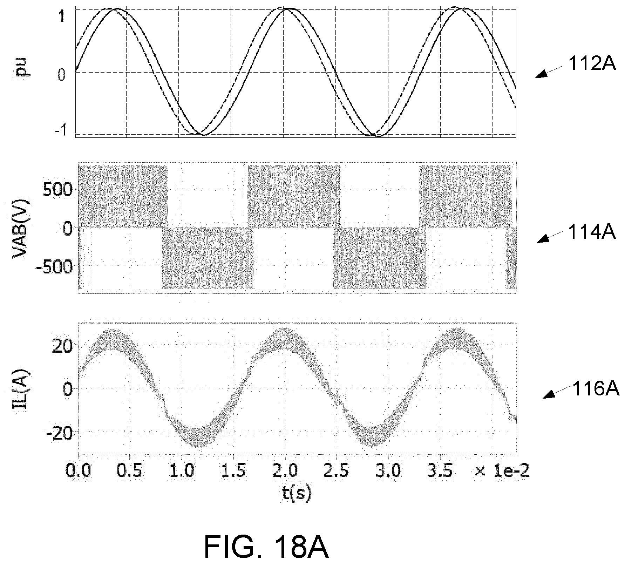

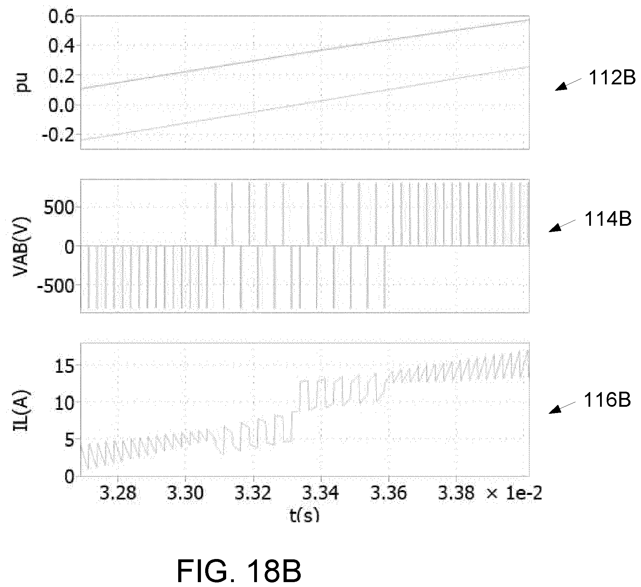

Another method to generate reactive power current is shown in FIGS. 18A-18B. FIG. 18A shows waveform diagrams VAC/IAC 112A, VAB 114A, and IL 116A, with FIG. 18B showing the same waveforms in zoomed-in view and referenced with the same diagram numbers with a suffix B in place of A. In general, the waveform diagrams of FIGS. 18A-18B show a shift from unipolar to bipolar operation around VAC zero crossings for reactive power control such that the voltage between the fast and slow legs changes from VDC to 0 to minus VDC in one switching cycle (e.g., the unfolder phase leg 66 is switched such that the voltage between the two midpoints (VAB) is VDC, 0 and -VDC in one switching cycle, also referred to as bipolar switching). Note that one switching cycle refers to one PWM time cycle (usually > 5 kHz). FIG. 18B shows a zoomed in version around VAC zero crossings of FIG. 18A. This way the inductor current is generated using three switching states, as opposed to the control method illustrated in FIGS. 14-16 where the voltage only changes from 0 to VDC and 0 to minus VDC in one switching cycle.

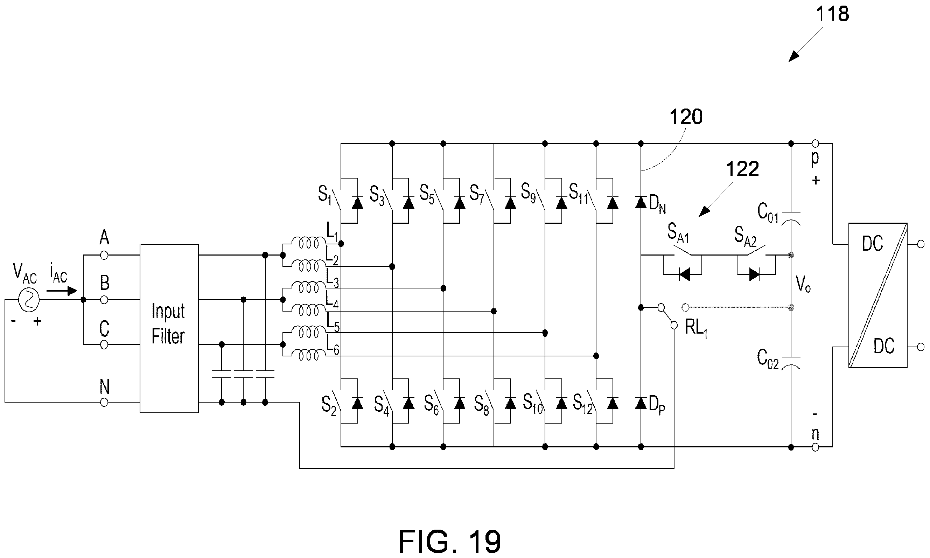

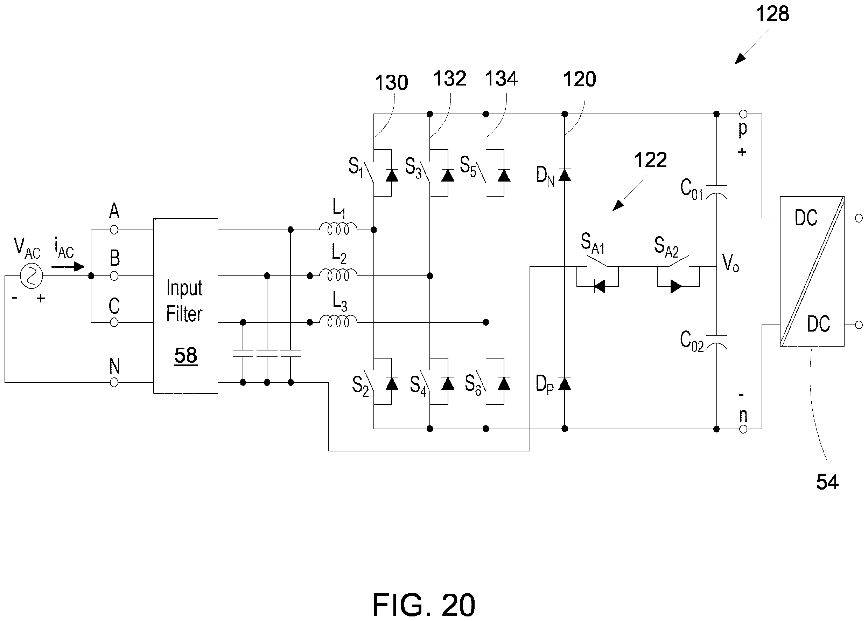

Having described what may generally be referred to as fractional switching control methods, attention is now directed to certain embodiments directed to changes in the architecture of a totem-pole converter. FIG. 19 shows an embodiment of a three-phase/single-phase compatible AC/DC converter 118. In the embodiment, three-phase/single-phase compatible AC/DC converter 118 interfaces a utility grid to a DC/DC converter for EV OBC implementations and for non-unity power factor operation. The three-phase/single-phase compatible AC/DC converter 118 shares some similarities in topology to the three-phase/single-phase compatible AC/DC converter 52 shown in FIG. 11, wherein the same references represent the same components and/or functions, and would not be repeatedly described hereinafter. Different from the three-phase/single-phase compatible AC/DC converter 52 shown in FIG. 11, the three-phase/single-phase compatible AC/DC converter 118 omits the first relay $RL_1$, the second relay $RL_2$ and the third relay $RL_3$ of the three-phase/single-phase compatible, AC/DC converter 52. The three-phase/single-phase compatible, AC/DC converter 118 includes an unfolder (diode) leg 120 including diodes $D_N$ and $D_P$, a T-type leg 122 having two active switches $S_{A1}$ and $S_{A2}$, and a relay $RL_1$. One terminal of the relay $RL_1$ is connected to the neutral terminal N, and the other terminal of the relay $RL_1$ is selectively connected to one of the midpoints of the unfolder (diode) leg 120 and the DC bus midpoint (i.e., the midpoint of the output filter or the midpoint of the capacitor leg). The relay $RL_1$ is used to switch from a DC bus midpoint to a midpoint of the unfolder leg 120 depending on whether the converter 118 operates in a three-phase configuration or a single-phase configuration. The two switches, $S_{A1}$ and $S_{A2}$ (also referred to as T-type leg switches) are connected with each other in series and connected between the midpoint of the unfolder leg 120 and the DC bus midpoint. This architecture/topology enables the three-phase/single-phase compatible AC/DC converter 118 to operate according to non-unity power factor operation. With a single-phase input, the relay $RL_1$ is switched to be connected between the midpoint of the diode leg and the neutral terminal N. Consequently, the three-phase/single-phase compatible AC/DC converter 118 operates as a totem-pole, PFC converter 128, as shown in FIG. 20. The totem-pole, PFC converter 128 interfaces the utility grid to the DC/DC converter 54. The totem-pole, PFC converter 128 receives the utility grid input (VAC, IAC) at an input filter 58, and resulting currents in boost chokes (inductors) $L_1$ through $L_3$ may be interleaved in single-phase operation. Note that in some embodiments, a different quantity (e.g., less/more than three) chokes may be used. For the example architecture or topology depicted in FIG. 20, the totem-pole, PFC converter 128 includes first phase leg 130 (also referred to as first switch leg having complementary switches $S_1$ and $S_2$), second phase leg 132 (also referred to as second switch leg having complementary switches $S_3$ and $S_4$), and third phase leg 134 (also referred to as third switch leg having complementary switches $S_5$ and $S_6$), the unfolder leg 120, the T-type leg 122 and capacitor leg as described above. To simplify the analysis of operation, it is assumed that output capacitances $C_{O1}$ and $C_{O2}$ of a capacitor leg are high enough such that output voltage $V_O$ can be considered reasonably constant throughout an AC line cycle.

When both input AC voltage VAC and input AC current IAC are positive and $S_{A1}$ and $S_{A2}$ of the T-type leg 122 are off, diode $D_P$ of the unfolder leg 120 is forward-biased and conducts current IAC. Similarly, when both input AC voltage VAC and input AC current IAC are negative, and $S_{A1}$ and $S_{A2}$ of the T-type leg 122 are off, diode $D_N$ of the unfolder leg 120 is forward-biased and conducts current IAC. For standard operation with unity power factor, switches $S_{A1}$ and $S_{A2}$ of the T-type leg 122 do not have to operate since diodes $D_P$ and $D_N$ of the unfolder leg 120 automatically unfold input voltage VAC.

When power factor is not unity, input current IAC may be either negative or positive regardless of the polarity of input voltage VAC, as shown in FIG. 3. The automatic input voltage unfolding by diodes $D_P$ and $D_N$ no longer works since the polarities of voltage VAC and current IAC are not the same for the entire half-line cycle.

Since diodes $D_P$ and $D_N$ can only conduct current in one direction when they are forward biased, a path is needed for current to flow when VAC and IAC are opposite in polarity. This path is provided by the addition of two active switches in the T-type leg 122, namely, $S_{A1}$ and $S_{A2}$. The T-type leg 122 provides a path for the boost choke current to flow, and provides the voltages VAC-VDC/2 and VAC+VDC/2 on the boost inductor when VAC is close to zero while the current has higher magnitude (e.g., see FIG. 3).

Digressing briefly, in FIG. 10, the T-type switches are activated when the magnitude of AC voltage is below $V_{bound}$ while switches $S_3$ and $S_4$ conduct when VAC magnitude is beyond $V_{bound}$.

However, in certain embodiments disclosed herein, the non-unity power factor operation is realized only with diodes in the unfolder leg 120 and the T-type leg switches are on when VAC and IAC (with the ripple) are opposite in polarity. Also, the T-type leg switches are kept on for a small time beyond VAC zero crossings to avoid the unfolder leg 120 jumping between VDC and 0 V too fast. The T-type leg switches operate at the line frequency and hence, have little or no switching losses.

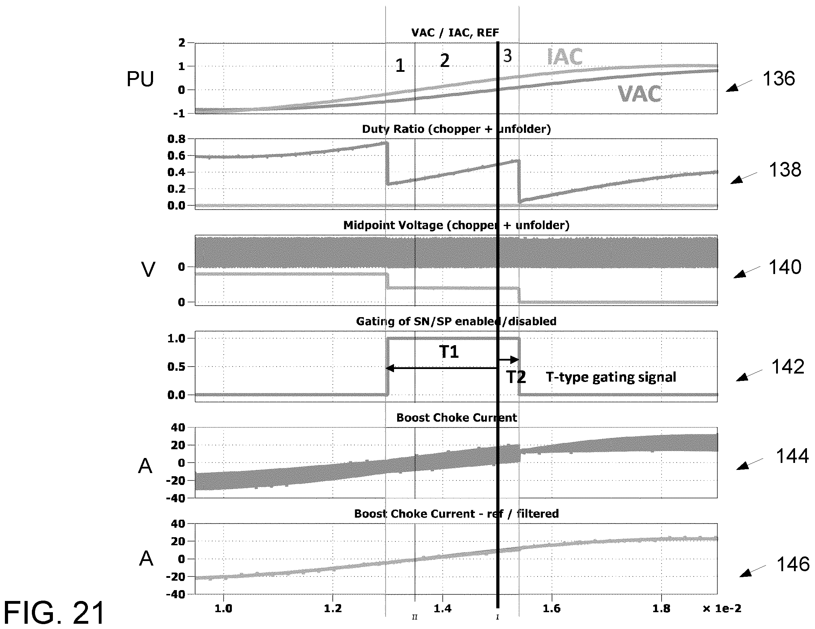

With reference to FIG. 21, with only diodes in the slow leg, T1 and T2 need to be extended such that whenever ILripple and VAC are opposite in sign, the T-type leg switches are turned on as the diodes can only conduct current in one direction. Thus, for leading power factor T1 can be calculated by:

$I_{acmax}*\sin(\omega T1+\phi)+|V_{acmax}*\sin(\omega t)|* DT_s/2L>0$ where $I_{acmax}$ equals the peak AC current magnitude, $\phi$ equals the phase-shift between VAC and IAC, $V_{acmax}$ equals the peak AC voltage magnitude, D equals the duty ratio, and $T_s$ equals the switching period.

T2 is chosen such that the T-type leg switches conduct when the duty ratio is less than 0.05.

For lagging power factor, T2 can be calculated by:

$$I_{acmax}*\sin(\omega T1+\phi)-|V_{acmax}*\sin(\omega t)|* DT_s/2L<0$$

T1 is chosen such that the T-type switches conduct when the duty ratio is less than 0.05.

Describing FIG. 21 further, shown is the timing for gate signal generation of the T-type leg 122 in the case of leading power factor. In particular, waveform diagrams include VAC/IAC, REF 136, duty ratio (chopper + unfolder) 138, midpoint voltage (chopper + unfolder) and gating of SN/SP enabled/disabled 140, gating of T-type switches 142, boost choke current 144, and boost choke current - Ref/filtered 146. Note that three regions (1, 2, and 3) are shown in FIG. 21. In particular, T-type modulation (non-PWM, only line frequency) is activated in regions 1, 2, and 3. In region 1, even though both input voltage and input current polarities are negative as shown by waveform diagram 136, waveform diagram 144 reveals that boost choke current starts touching 0 A due to ripple, which avoids jitter across the unfolder leg 120 by activating a T-type mode at this time. In region 2, input voltage and current polarities are not equal, also indicating that T-type mode needs to be activated. In region 3, operations cannot switch over from T-type to $D_P$ because the PWM phase leg duty ratio would be saturated. Thus, operations involve waiting for a small time to deactivate the T-type switch gating signal. The PWM duty ratio falls to approximately 5%. Also revealed by the waveforms in FIG. 21, and as described above, T1 is calculated based on the time when ILripple becomes greater than 0 until the time VAC crosses 0 V. Further, T2 is calculated based on the time when the duty ratio becomes >0.05 or a minimum threshold number.

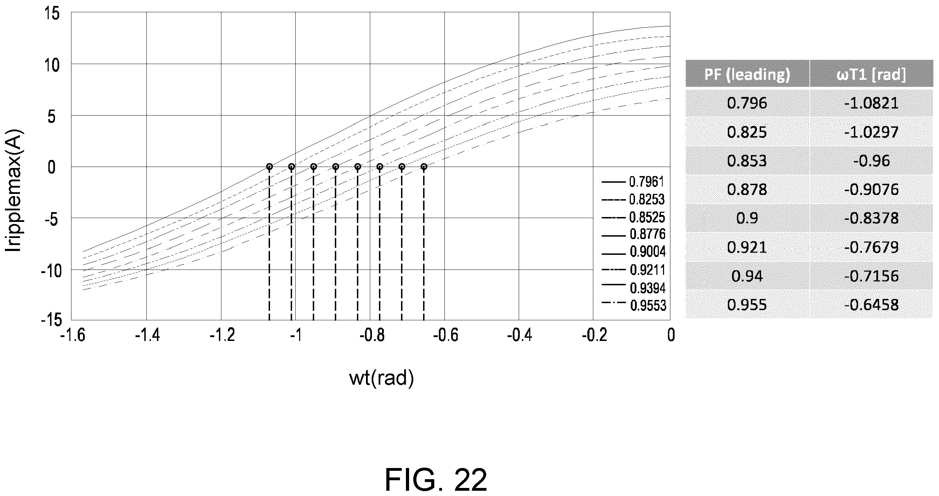

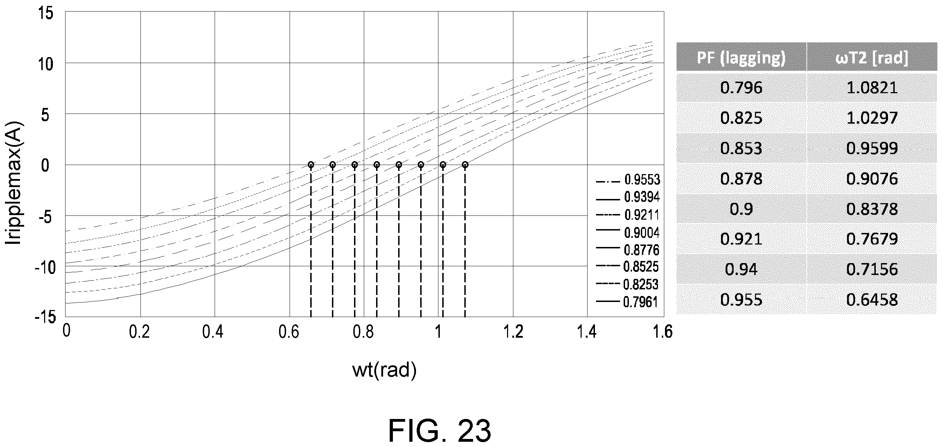

FIGS. 22-23 show the variation of T1 and T2 for a range of leading and lagging power factors, respectively. For instance, FIG. 22 shows the variation of phase angle at which T-type gate signals are enabled ($\omega T1$) with variation of phase-shift from approximately 0.8-0.95 leading, with the values also shown in the table to the right in the figure. FIG. 23 shows the variation of phase angle at which T-type gate signals are enabled (wT2) with variation of phase-shift from approximately 0.8-0.95 lagging, with the values also shown in the table to the right in the figure.

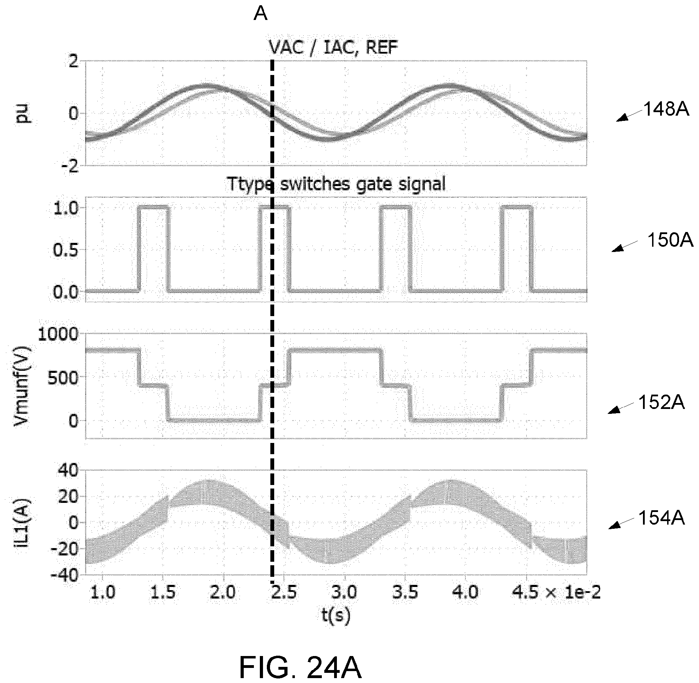

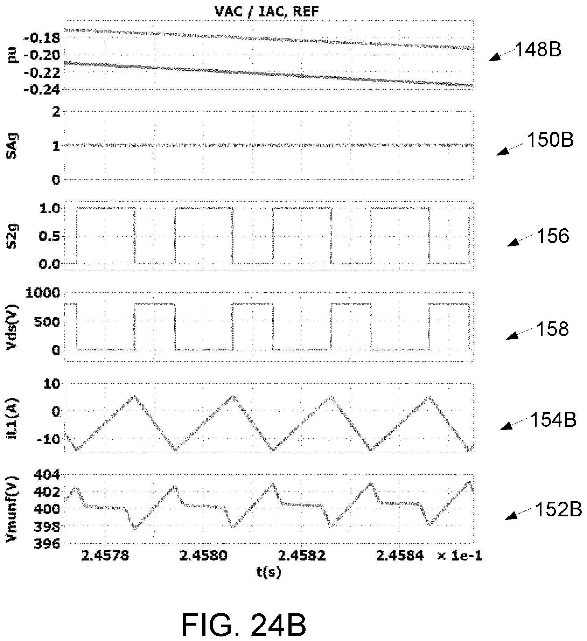

FIGS. 24A and 24B show some select waveforms during non-unity power factor operation for the totem pole PFC converter 128 (FIG. 20) at power factor of 0.9 leading operation with zoom-in (FIG. 24B) when AC current and voltage are in opposite direction. The waveform diagrams of FIGS. 24A-24B include VAC/IAC, REF 148 (148A, 148B), T type switches gate signals 150A (and the gate signals of the T-type leg switches, Sag 150B), Vmunf 152 (152A, 152B), which is the Vmidpoint of the unfolder leg 120, inductor current IL1 154 (154A, 154B), gate signals of the fast leg, Sg 156, and Vds of the fast leg switches 158. In FIG. 24A, the gating signal 150A for T-type switches is shown, and when $S_{A1}$ and $S_{A2}$ are on, the voltage 152A at the midpoint of the unfolder leg in VDC/2. FIG. 24B shows a zoom-in picture of the gate signals in the high frequency leg (e.g., $S_1$, $S_2$ leg). It can be seen that a negative average current is generated while the AC voltage is positive.

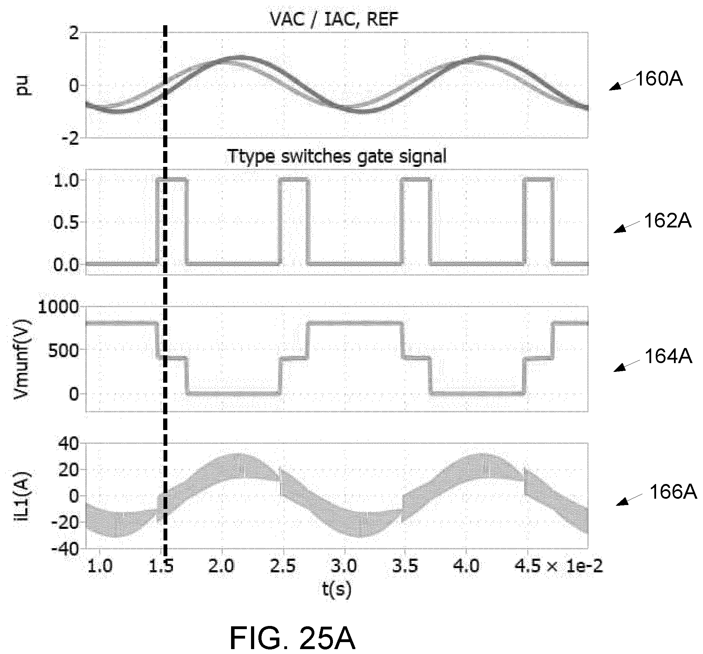

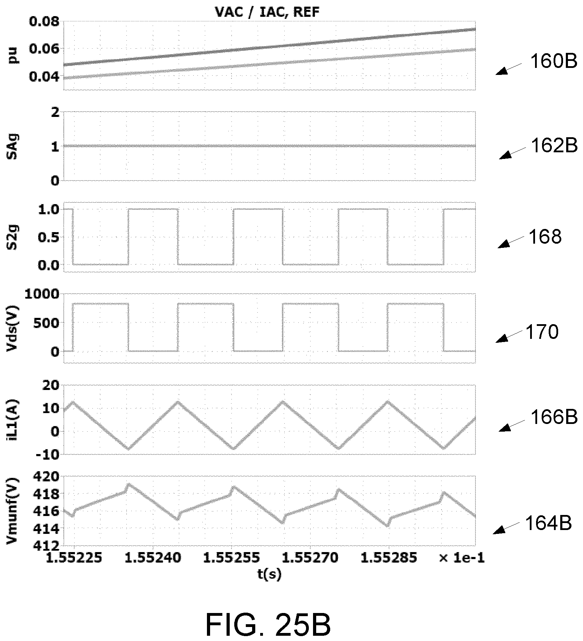

FIGS. 25A and 25B show some select waveforms during non-unity power factor operation for the totem pole PFC converter 128 (FIG. 20) at power factor of 0.9 lagging operation with zoom-in (FIG. 25B) when AC current and voltage are in opposite direction. Waveform diagrams 160-170 are similar to the diagrams 148-158 of FIGS. 24A-24B, and hence an explanation of each will be omitted here for brevity. One observation from FIGS. 25A-25B is that the input current ripple may be reduced by interleaving multiple phase legs.

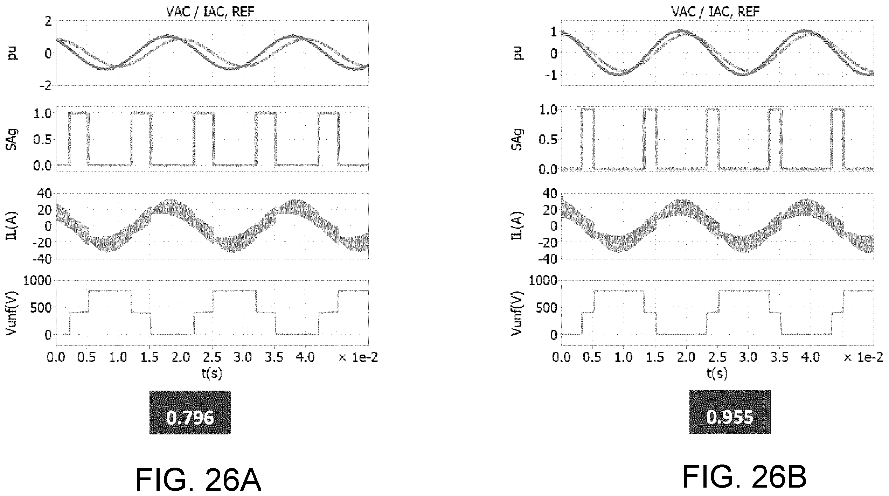

Simulation results are shown for 0.796 and 0.955 leading power factors in FIGS. 26A and 26B, respectively, for some of the types of waveform diagrams shown in FIGS. 24A-24B. As the power factor increases, the T-type leg 122 is enabled for a longer time.

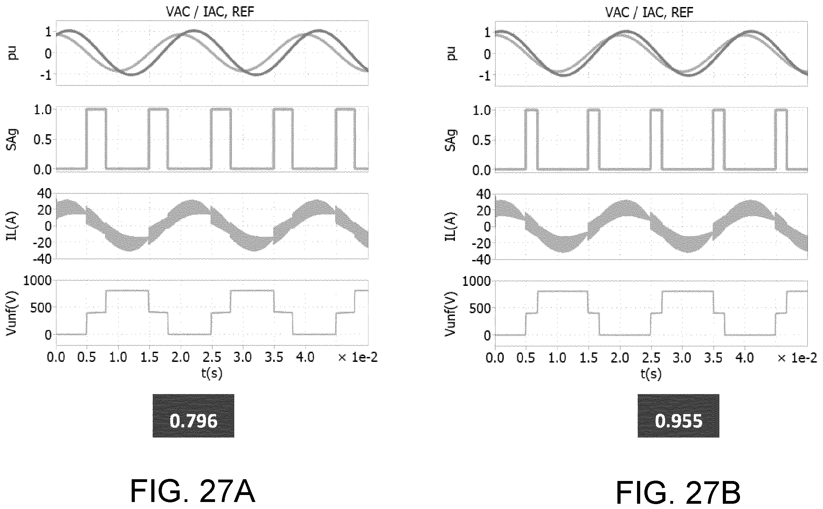

Simulation results are shown for 0.796 and 0.955 lagging power factor in FIGS. 27A and 27B, respectively.

It is noted that the control methods described in conjunction with FIGS. 20-25B can work with any power factor and any current shape.

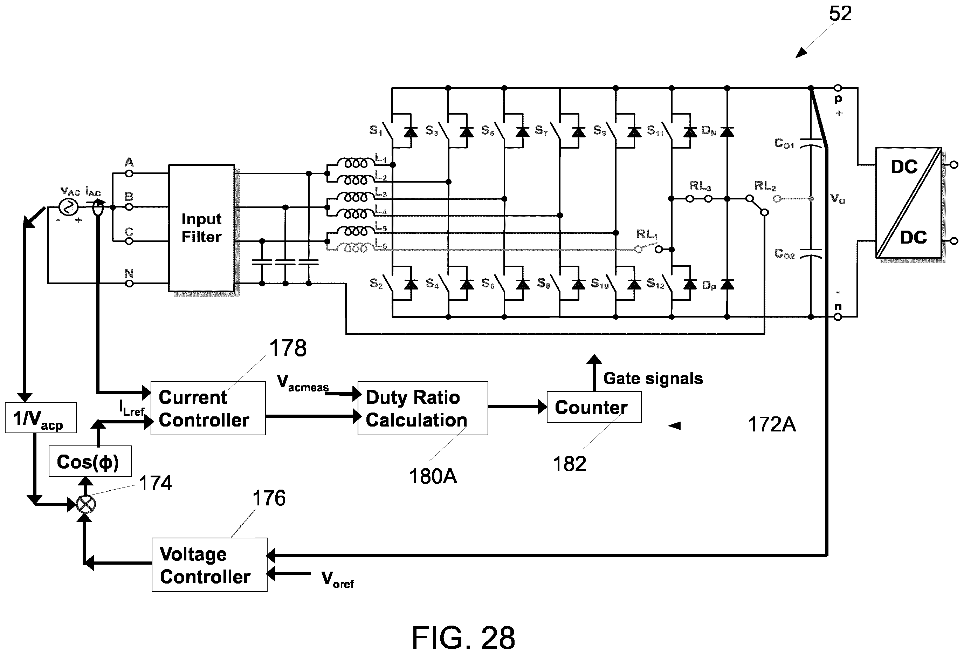

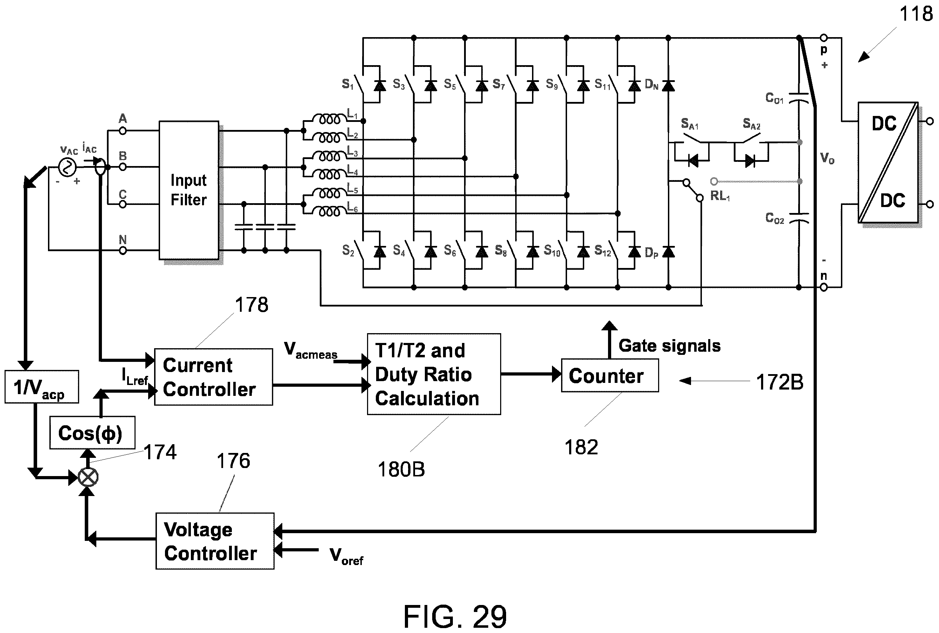

FIGS. 28-29 show an embodiment of an example control system 172 (e.g., 172A in FIG. 28, and 172B in FIG. 29) that may be used to control the three-phase/single-phase AC/DC converters 52, 118 (including the totem-tole PFC converters 56, 128). For instance, the control system 172A may be used to control the three-phase/single-phase AC/DC converters 52 to enable non-unity power factor operation, as well as unity power factor operation. Similarly, the control system 172B may be used to control the three-phase/single-phase AC/DC converters 118 to enable non-unity power factor operation, as well as unity power factor operation. In some embodiments, the control system 172A may be incorporated into a device that is separate from the device incorporating the control system 172B, or in some embodiments, functionality of both may be combined into a single device. The control system 172 may be embodied as a custom-made or commercially available processor, including a single or multi-core central processing unit (CPU), tensor processing unit (TPU), graphics processing unit (GPU), vector processing unit (VPU), or an auxiliary processor among several processors, a semiconductor-based microprocessor (in the form of a microchip), a macroprocessor, one or more application specific integrated circuits (ASICs), field programmable gate arrays (FPGAs), a plurality of suitably configured digital logic gates, and/or other existing electrical configurations including discrete elements both individually and in various combinations to coordinate the overall operation of the control system 172. When certain embodiments of the control system 172 are implemented at least in part with software (including firmware), it should be noted that the software can be stored on any of a variety of non-transitory computer-readable (storage) medium for use by, or in connection with, a variety of computer-related systems or methods. In the context of this document, a computer-readable medium may include an electronic, magnetic, optical, or other physical device or apparatus that may contain or store a computer program (e.g., executable code or instructions) for use by or in connection with the control system 172. When certain embodiments of the control system 172 are implemented at least in part with hardware, such functionality may be implemented with any or a combination of the following technologies: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), TPUs, GPUs, and/or other accelerators/co-processors, etc.

Referring in particular to FIG. 28, shown is the three-phase/single-phase AC/DC converters 52 and the control system 172A for closed-loop control with fractional switching. The control system 172A includes various functionality that may be implemented in hardware, software, or a combination of both as described above. The control system 172A includes a multiplier 174, a voltage controller 176, a current controller 178, a duty ratio calculation 180A, a counter 182, a first sensor, a second sensor and a third sensor. Although operation of the control system 172A is self-evident from FIG. 28, a brief description follows. The first sensor is configured to detect the input voltage. The second sensor is configured to detect the input current. The third sensor is configured to detect the output voltage. The multiplier 174 is connected to the first sensor. The voltage controller 176 is connected between the multiplier 174 and the third sensor. The error of the measured output voltage and a reference output voltage Voref is fed to the voltage controller 176, which generates the magnitude for reference input current. This magnitude is then multiplied by the unity sine waveform generated from the input voltage and power factor angle by the multiplier 174 to generate the reference current signal, $I_{Lref}$. The current controller 178 is connected with the multiplier 174 and the second sensor. The error of the measured input current and reference current signal $I_{Lref}$ is fed into the current controller 178, which generates the duty cycle depending on the magnitude of AC voltage which, when below 8% of peak AC voltage, fractional switching is enabled. This duty cycle is compared to, e.g., a sawtooth waveform in the counter 182, and gate signals are generated for all the active devices. In this embodiment, the operations of the three-phase/single-phase AC/DC converters 52 are described as above, and are not redundantly described hereinafter.

Referring in particular to FIG. 29, shown is the three-phase/single-phase AC/DC converters 118 and the control system 172B for closed loop control with T-type leg switches. Similar functionality to that shown in FIG. 28 are referenced with like numerals, with T1/T2 calculation included with the duty ratio calculation and referenced as 180B. The error of the voltage controller 176 multiplied by the power factor angle through the multiplier 174 generates the reference current signal, $I_{Lref}$. The error of the current controller 178 generates the duty cycle when T-type switches are deactivated. Depending on the magnitude of AC voltage and reference current, T1 and T2 are calculated. In this embodiment, the operations of the three-phase/single-phase AC/DC converters 118 are described as above, and are not redundantly described hereinafter.

## Claims

1. A method of operating a three-phase/single-phase compatible AC/DC converter (52) comprising plural relays ($RL_1$, $RL_2$, and $RL_3$) that, when selectively activated or deactivated, enables operation as a three-phase converter or a totem-pole power factor correction (PFC) converter (56) with a single-phase input, the totem-pole PFC converter having a parallel arrangement of a diode leg (68) and slow leg (66) connected at their respective midpoints to neutral so as to operate in unity power factor or non-unity power factor, **characterized in that** the method comprises:

> operating plural fast legs (60, 62) at a first duty cycle for a period defined by a predefined range of an input voltage, and at least a second duty cycle outside of the period different than the first duty cycle for non-unity power factor cases; and
> increasing a switching frequency of the slow leg (66) during the period while in non-unity power factor operation.

2. The method of claim 1, wherein a voltage between a midpoint of the fast leg (60, 62) and the midpoint of the slow leg (66) is unipolar.

3. The method of claim 1, wherein a voltage between a midpoint of the fast leg (60, 62) and the midpoint of the slow leg (66) is bipolar.

4. The method of claim 1, wherein operating the plural fast legs (60, 62) comprises operating at greater than 0% duty cycle ratio and less than 100% duty cycle ratio.

5. The method of claim 1, wherein operating the plural fast legs (60, 62) comprises operating the plural fast legs (60, 62) at different duty cycles, the plural fast legs (60, 62) having no phase shift relative to one another.

6. The method of claim 1, wherein the slow leg (66) switches at line frequency outside the period for the case of non-unity power factor and switches at a higher frequency in the period for the case of non-unity power factor.

7. A method of operating a three-phase/single-phase compatible AC/DC converter (118) comprising inductors ($L_1$, $L_2$, $L_3$) coupled to plural fast legs (130, 132, 134) and further having a relay ($RL_1$) that, when connected to a midpoint of a diode unfolder leg (120) and neutral, enables operation as a totem-pole power factor correction (PFC) converter (128), **characterized in that** the method comprises:

> connecting the diode unfolder leg (120) with a leg comprising a pair of capacitors ($C_{O1}$, $C_{O2}$) using a T-type leg (122), the T-type leg (122) comprising a pair of active switches ($S_{A1}$, $S_{A2}$); and
> turning the pair of active switches ($S_{A1}$, $S_{A2}$) on around AC voltage zero crossings during non-unity power factor operation.

8. A three-phase/single-phase compatible AC/DC converter (52) comprising plural relays ($RL_1$, $RL_2$, and $RL_3$) that, when selectively activated or deactivated, enables operation as a three-phase converter or totem-pole power factor correction (PFC) converter (56) with a single-phase input, wherein for a single-phase input and non-unity power factor operation, **characterized in that** the three-phase/single-phase compatible AC/DC converter (52) comprises:

> first, second and third switch legs (60, 62, 64) electrically connected in parallel, each having a first switch midpoint electrically to a corresponding phase of an AC power source through an inductor ($L_1$, $L_2$, $L_3$);
> a fourth switch leg (66), electrically connected in parallel to the first, second, and third switch legs (60, 62, 64), and having a second switch midpoint electrically connected to a common node electrically connected to a neutral terminal of the AC power source; and
> a diode leg (68), electrically connected in parallel to the fourth switch leg (66), and having a diode midpoint electrically connected to the common node.

9. The three-phase/single-phase compatible AC/DC converter (52) of claim 8, further comprising three capacitors, wherein first terminals of the three capacitors are electrically connected to three phases of the AC power source respectively, and second terminals of the three capacitors are coupled together as the common node.

10. The three-phase/single-phase compatible AC/DC converter (52) of claim 8, wherein the first, second and third switch legs (60, 62, 64) are configured to operate at a first duty cycle for a period defined by a predefined range of an input voltage, and at least a second duty cycle outside of the period different than the first duty cycle.

11. The three-phase/single-phase compatible AC/DC converter (52) of claim 10, wherein the fourth switch leg (66) is configured to operate at an increased switching frequency during the period.

12. The three-phase/single-phase compatible AC/DC converter (52) of claim 8, wherein a voltage between a midpoint of the first, second and third switch legs (60, 62, 64) and the midpoint of the fourth switch leg (66) is unipolar.

**13.** The three-phase/single-phase compatible AC/DC converter (52) of claim 8, wherein a voltage between a midpoint of the first, second and third switch legs (60, 62, 64) and the midpoint of the fourth switch leg (66) is bipolar.

**14.** The three-phase/single-phase compatible AC/DC converter (52) of claim 8, wherein the first, second and third switch legs (60, 62, 64) are configured to operate at greater than 0% duty cycle ratio and less than 100% duty cycle ratio.

**15.** The three-phase/single-phase compatible AC/DC converter (52) of claim 8, wherein the first, second and third switch legs (60, 62, 64) are configured to operate at different duty cycles, the first, second and third switch legs (60, 62, 64) having no phase shift relative to one another.

**16.** The three-phase/single-phase compatible AC/DC converter (52) of claim 8, wherein the fourth switch leg (66) switches at line frequency outside a period, defined by a predefined range of an input voltage, for the case of non-unity power factor and switches at a higher frequency in the period for the case of non-unity power factor.

**17.** A three-phase/single-phase compatible AC/DC converter (118) comprising a relay ($RL_1$) that, when activated, enables operation as a totem-pole power factor correction (PFC) converter (128) with a single-phase input, wherein for a single-phase input and non-unity power factor operation, **characterized in that** the three-phase/single-phase compatible AC/DC converter (118) comprises:

> first, second and third switch legs (130, 132, 134) electrically connected in parallel, each having a switch midpoint electrically to a corresponding phase of an AC power source through an inductor ($L_1$, $L_2$, $L_3$);
> a diode leg (120), electrically connected in parallel to the first, second, and third switch legs (130, 132, 134), and having a diode midpoint electrically connected to a common node electrically connected to a neutral terminal of the AC power source;
> a capacitor leg, electrically connected in parallel to the electrically connected to a neutral terminal of the AC power source, and having a capacitor midpoint; and
> two T-type switches ($S_{A1}$, $S_{A2}$), electrically connected in series between the diode midpoint and the capacitor midpoint.

**18.** The three-phase/single-phase compatible AC/DC converter (118) of claim 17, further comprising three capacitors, wherein first terminals of the three capacitors are electrically connected to three phases of the AC power source respectively, and second terminals of the three capacitors are coupled together as a capacitor neutral.

**19.** The three-phase/single-phase compatible AC/DC converter (118) of claim 17, wherein the two T-type switches ($S_{A1}$, $S_{A2}$) are configured to be turned on when inductor current including ripple and AC voltage are opposite in sign in case of non-unity power factor.

**20.** The three-phase/single-phase compatible AC/DC converter (118) of claim 17, wherein a diode leg mid-point voltage is transitioned from 0 to Vdc/2 or Vdc to Vdc/2 when inductor current including ripple and AC voltage are opposite in sign in case of non-unity power factor.

FIG. 1 PRIOR ART

## FIG. 2 PRIOR ART

$V_{AN}$

AC/
DC
14

12

DC
DC
16

$V_{BAT}$
−   +

HV
BATT
ERY
18

FIG. 3 PRIOR ART

FIG. 4A

FIG. 4B

FIG. 5

FIG. 6A

FIG. 6B

EP 4 618 387 A1

FIG. 7A

Input AC Voltage — 28B

Phase Leg Duty Ratio — 30B

PWM Active — 32B

Input AC Current (+ reference) — 34B

FIG. 7B

**Input AC Voltage**

36A

**Phase Leg Duty Ratio**

38A

**PWM Active**

40A

**Input AC Current (+ reference)**

42A

FIG. 8A

Input AC Voltage — 36B

Phase Leg Duty Ratio — 38B

PWM Active — 40B

Input AC Current (+ reference) — 42B

× 1e-2

3.50

FIG. 8B

FIG. 9

FIG. 10

EP 4 618 387 A1

FIG. 11

FIG. 12

**FIG. 13**

Input Voltage VAC 80

Input Current Reference 82

Top Switch Gating Signal 84

Switch SN Gating Signal 86

Unfolding Phase Leg Voltage 88

Boost Choke L1..3 Current 90

× 1e-2

6.45  6.50  6.55

FIG. 14

**Input Voltage VAC**

80

**Input Current Reference**

82

**Duty Ratios of Phase Legs 1..3**

92

**Unfolding Phase Leg Voltage**

88

**Boost Choke L1..3 Current**

90

FIG. 15

FIG. 16

Input Voltage VAC

← 94

Input Current IAC

← 96

Switch SN Gating Signal

← 106

Switch SP Gating Signal

← 108

Unfolding Phase Leg Voltage

← 110

FIG. 17

EP 4 618 387 A1

FIG. 18A

FIG. 18B

EP 4 618 387 A1

FIG. 19

EP 4 618 387 A1

FIG. 20

FIG. 21

FIG. 22

EP 4 618 387 A1

| PF (lagging) | ωT2 [rad] |
|---|---|
| 0.796 | 1.0821 |
| 0.825 | 1.0297 |
| 0.853 | 0.9599 |
| 0.878 | 0.9076 |
| 0.9 | 0.8378 |
| 0.921 | 0.7679 |
| 0.94 | 0.7156 |
| 0.955 | 0.6458 |

FIG. 23

FIG. 24A

EP 4 618 387 A1

FIG. 24B

VAC / IAC, REF

160A

Ttype switches gate signal

162A

164A

166A

pu

Vmunf(V)

iL1(A)

t(s)

FIG. 25A

FIG. 25B

FIG. 26B

FIG. 26A

FIG. 27B

FIG. 27A

FIG. 28

EP 4 618 387 A1

FIG. 29

EP 4 618 387 A1

Europäisches
Patentamt

European
Patent Office

Office européen
des brevets

**EUROPEAN SEARCH REPORT**

**Application Number**

EP 25 16 3956

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/384815 A1 (KOLAR JOHANN WALTER [CH] ET AL) 9 December 2021 (2021-12-09) | 1-5, 7-10, 12-15, 17-20 | INV. H02M1/00 H02M1/42 H02M7/487 |
| A | * paragraph [0247]; figures 10,21 * ----- | 6,11,16 | |
| Y | US 2015/280548 A1 (SHOYAMA MASAHITO [JP] ET AL) 1 October 2015 (2015-10-01) * figure 9 * ----- | 1-5, 8-10, 12-15 | |
| Y | CN 115 603 563 B (HUIZHOU LEYITONG TECH CO LTD) 14 March 2023 (2023-03-14) * figure 10 * ----- | 7,17-20 | |

| | |
|---|---|
| **TECHNICAL FIELDS SEARCHED (IPC)** | |
| H02M | |

The present search report has been drawn up for all claims

| Place of search | Date of completion of the search | Examiner |
|---|---|---|
| The Hague | 7 July 2025 | Gusia, Sorin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&: member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 3956

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2025

| Patent document cited in search report | Publication date | Patent family member(s) | Publication date |
|---|---|---|---|
| US 2021384815 A1 | 09-12-2021 | CH 715448 A2 | 15-04-2020 |
| | | CN 113056865 A | 29-06-2021 |
| | | EP 3868010 A1 | 25-08-2021 |
| | | KR 20210076062 A | 23-06-2021 |
| | | US 2021384815 A1 | 09-12-2021 |
| | | US 2023118022 A1 | 20-04-2023 |
| | | WO 2020079019 A1 | 23-04-2020 |
| US 2015280548 A1 | 01-10-2015 | JP 6287473 B2 | 07-03-2018 |
| | | JP 2015192546 A | 02-11-2015 |
| | | US 2015280548 A1 | 01-10-2015 |
| CN 115603563 B | 14-03-2023 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Reactive power performance requirements for wind and solar plants. **A. ELLIS** ; **R. NELSON** ; **E. VON ENGELN** ; **R. WALLING** ; **J. MACDOWELL** ; **L. CASEY** ; **E. SEYMOUR** ; **W. PETER** ; **C. BARKER** ; **B. KIRBY et al.** 2012 IEEE power and energy society general meeting. IEEE, 2012, 1-8
- **D. CONDON** ; **D. MCPHAIL**. Voltage regulation of distribution networks using inverter reactive power functionality - Australian utility experience. *2015 IEEE PES Asia-Pacific Power and Energy Engineering Conference*, 2015, 1-5

- Inverter-based resource performance and analysis, technical workshop. *NERC IRPT meeting*, February 2019, https://www.nerc.com/comm/PC/IRPTF%20Workshops/ IRPTF_Workshop_Presentations. pdf
- **J. SUN** ; **L. ZHU** ; **R. QIN** ; **D. J. COSTINETT** ; **L. M. TOLBERT**. Single-Phase GaN-Based T-Type Totem-Pole Rectifier With Full-Range ZVS Control and Reactive Power Regulation. *IEEE Transactions on Power Electronics*, February 2023, vol. 38 (2), 2191-2201